# EUROPEAN PATENT APPLICATION

(11) **EP 4 841 400 A1**
(43) Date of publication of application: **18.11.2026**
(21) Application number: 25833401.0
(22) Date of filing: 11.04.2025
(51) Int. Cl.: G06F 3/01, G01L 5/00, G06F 3/02, B06B 1/06

(54) **ELECTRONIC DEVICE COMPRISING HAPTIC FEEDBACK BUTTON MODULE**

(30) Priority: 01.07.2024 KR 20240086180; 20.08.2024 KR 20240111135
(71) Applicant: Samsung Electronics Co., Ltd., Suwon-si, Gyeonggi-do 16677 (KR)
(72) Inventor: HONG, Hyunchul, Suwon-si, Gyeonggi-do 16677 (KR); KANG, Daewon, Suwon-si, Gyeonggi-do 16677 (KR); KIM, Byoungjun, Suwon-si, Gyeonggi-do 16677 (KR); KIM, Taesik, Suwon-si, Gyeonggi-do 16677 (KR); PARK, Cheolwoong, Suwon-si, Gyeonggi-do 16677 (KR); YOON, Shinhyuk, Suwon-si, Gyeonggi-do 16677 (KR); LEE, Eunbi, Suwon-si, Gyeonggi-do 16677 (KR); CHUN, Jinwook, Suwon-si, Gyeonggi-do 16677 (KR); CHOI, Junyoung, Suwon-si, Gyeonggi-do 16677 (KR)
(74) Representative: Gulde & Partner
(86) International application number: PCT/KR2025/004965
(87) International publication number: WO 2026/010089

(57) **Abstract**

An electronic device is provided. The electronic device includes a housing, a button provided at a lateral side of the housing, a flexible printed circuit board (FPCB) disposed below the button, the FPCB including a first sensor and a second sensor mounted on a first surface of the FPCB, the first sensor configured to detect a first pressure input applied through a first pressing portion of the button and output a first signal corresponding to the first pressure input, the second sensor configured to detect a second pressure input applied through a second pressing portion of the button and output a second signal corresponding to the second pressure input, the FPCB electrically connected to the first sensor and the second sensor, a vibration actuator mounted on the first surface of the FPCB between the first sensor and the second sensor, a vibration driver integrated circuit (IC) for driving the vibration actuator, memory when executed by the one or more processors individually or collectively, cause the electronic device to identify a type of button input received through the button based on information received through at least one of the first sensor and the second sensor, and cause the vibration actuator to generate a vibration pattern based on the type of button input.

## Description

### BACKGROUND

### 1. Field

The disclosure relates to an electronic device including a haptic feedback button module.

### 2. Description of Related Art

Recently, with the advancement of electronic technology, electronic devices with haptic feedback functions are being developed. For example, electronic devices, such as smartphones are representative examples. These electronic devices can provide a feedback effect through a haptic motor when a button is pressed.

### SUMMARY

Aspects of the disclosure are to address at least the above-mentioned problems and/or disadvantages and to provide at least the advantages described below. Accordingly, an aspect of the disclosure is to provide an electronic device including a haptic feedback button module.

Additional aspects will be set forth in part in the description which follows and, in part, will be apparent from the description, or may be learned by practice of the presented embodiments.

In accordance with an aspect of the disclosure, an electronic device is provided. The electronic device includes a housing, a button provided at a lateral side of the housing, a flexible printed circuit board (FPCB) disposed below the button, the FPCB including a first sensor and a second sensor mounted on a first surface of the FPCB, the first sensor configured to detect a first pressure input applied through a first pressing portion of the button and output a first signal corresponding to the first pressure input, the second sensor configured to detect a second pressure input applied through a second pressing portion of the button and output a second signal corresponding to the second pressure input, the FPCB electrically connected to the first sensor and the second sensor, a vibration actuator mounted on the first surface of the FPCB between the first sensor and the second sensor, a vibration driver integrated circuit (IC) for driving the vibration actuator, memory, and at least one or more processors comprising processing circuitry. The instructions when executed by the at least one processor, cause the electronic device to identify a type of button input received through the button based on information received through at least one of the first sensor and the second sensor, and cause the vibration actuator to generate a vibration pattern based on the type of button input.

In accordance with another aspect of the disclosure, an electronic device is provided. The electronic device includes a housing including an outer portion in which a coupling hole is provided, an inner portion separated from the outer portion and a containing space provided between the outer portion and the inner portion, a movable button inserted into the coupling hole of the outer portion of the housing, and a haptic feedback button module contained in the containing space of the housing and configured to transmit vibration to the button when pressed by a pressing motion of the button.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF THE DRAWINGS

FIG. 1 is a block diagram of an electronic device capable of performing operations according to an embodiment of the disclosure;
FIG. 2 is a perspective view illustrating a bar-type smartphone as an electronic device according to an embodiment of the disclosure;
FIG. 3 is a view illustrating a haptic feedback button module provided in an electronic device according to an embodiment of the disclosure;
FIG. 4 is an exploded view illustrating a haptic feedback button module according to an embodiment of the disclosure;
FIG. 5 is an exploded view illustrating a haptic feedback button module according to an embodiment of the disclosure;
FIG. 6 is a cross-sectional view illustrating a stacked structure of configurations including a haptic feedback button module according to an embodiment of the disclosure;
FIG. 7 is a cross-sectional view illustrating a haptic feedback button module according to an embodiment of the disclosure;
FIG. 8 is a view illustrating a waterproof member coupled to a button of a haptic feedback button module according to an embodiment of the disclosure;
FIG. 9 is a cross-sectional view illustrating a waterproof structure of a haptic feedback button module according to an embodiment of the disclosure;
FIG. 10 is a view illustrating that a button of a haptic feedback button module is separated from a coupling hole of a housing according to an embodiment of the disclosure;
FIG. 11 is a view illustrating a state in which a button of a haptic feedback button module is inserted into a coupling hole of a housing according to an embodiment of the disclosure;
FIG. 12 is a view illustrating that a button of a haptic feedback button module is separated from a coupling hole of a housing according to an embodiment of the disclosure;
FIG. 13 is a view illustrating a state in which a button of a haptic feedback button module is inserted into a coupling hole of a housing according to an embodiment of the disclosure;
FIG. 14 is a view illustrating that a button of a haptic feedback button module is separated from a coupling hole of a housing according to an embodiment of the disclosure;
FIG. 15 is a view illustrating a state in which a button of a haptic feedback button module is inserted into a coupling hole of a housing according to an embodiment of the disclosure;
FIG. 16 is a view illustrating a haptic feedback button module including a plurality of spacers according to an embodiment of the disclosure;
FIG. 17 is a view illustrating a waterproof member in close contact with a housing by a plurality of spacers according to an embodiment of the disclosure;
FIG. 18 illustrates a haptic feedback operation of a haptic feedback button module according to an embodiment of the disclosure;
FIG. 19 is a block diagram illustrating configuration for performing a haptic feedback operation according to an embodiment of the disclosure;
FIG. 20 is a block diagram illustrating configuration for performing a haptic feedback operation according to an embodiment of the disclosure;
FIG. 21 is a view illustrating an operation of a first force sensor and a second force sensor according to a method of pressing a button of a haptic feedback button module according to an embodiment of the disclosure;
FIGS. 22 and 23 are views illustrating a vibration pattern of a button according to a length of a vibration actuator of a haptic feedback button module according to various embodiments of the disclosure;
FIGS. 24, 25, 26, 27, and 28 are views illustrating a vibration pattern of a button when a haptic feedback button module includes a single supporter according to various embodiments of the disclosure;
FIG. 29 is a view illustrating a fixing protrusion provided on a supporter of a haptic feedback button module according to an embodiment of the disclosure;
FIG. 30 is a view illustrating a supporter inserted into a receiving space of a housing according to an embodiment of the disclosure;
FIGS. 31, 32, 33, and 34 are views illustrating a vibration pattern of a button when a haptic feedback button module includes a plurality of supporters according to various embodiments of the disclosure;
FIG. 35 is a view illustrating a plurality of holes provided in a supporter of a haptic feedback button module according to an embodiment of the disclosure;
FIG. 36 is a view illustrating a state in which a vibration actuator is mounted on a supporter of a haptic feedback button module according to an embodiment of the disclosure;
FIGS. 37, 38, 39, 40, 41, and 42 are views illustrating a vibration pattern of a button according to a shape of a haptic feedback button module according to various embodiments of the disclosure;
FIG. 43 is an exploded view illustrating a vibration transmission member coupled to a waterproof member according to an embodiment of the disclosure;
FIG. 44 is a cross-sectional view illustrating a vibration transmission member coupled to a waterproof member according to an embodiment of the disclosure;
FIG. 45 is an assembly view illustrating a vibration transmission member coupled to a waterproof member according to an embodiment of the disclosure;
FIG. 46 is a cross-sectional view illustrating a waterproof member along line B-B' according to an embodiment of the disclosure;
FIGS. 47 and 48 are views illustrating a vibration actuator and first and second force sensors stacked according to various embodiments of the disclosure;
FIG. 49 is a view illustrating a vibration actuator and first and second force sensors together in contact with first and second protrusions according to an embodiment of the disclosure;
FIGS. 50, 51, and 52 are views illustrating a vibration actuator and first and second force sensors disposed on different sides of a flexible printed circuit board according to various embodiments of the disclosure;
FIG. 53 is a view illustrating a haptic feedback button module according to an embodiment of the disclosure;
FIG. 54 is a cross-sectional view illustrating a haptic feedback button module according to an embodiment of the disclosure;
FIG. 55 is a cross-sectional view illustrating a haptic feedback button module according to an embodiment of the disclosure;
FIG. 56 is a view illustrating a smartwatch as an electronic device according to an embodiment of the disclosure;
FIGS. 57 and 58 are views illustrating a haptic feedback button module applied to a smartwatch according to various embodiments of the disclosure;
FIG. 59 is a view illustrating augmented reality glasses as an electronic device according to an embodiment of the disclosure; and
FIG. 60 is a view illustrating a haptic feedback button module applied to augmented reality glasses according to an embodiment of the disclosure.

### DETAILED DESCRIPTION

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In describing the disclosure, when it is decided that a detailed description for the known functions or configurations related to the disclosure may unnecessarily obscure the gist of the disclosure, the detailed description therefor will be omitted. In addition, the following embodiments may be modified in several different forms, and the scope of the technical spirit of the disclosure is not limited to the following embodiments. Rather, these embodiments make the disclosure thorough and complete, and are provided to completely transfer the spirit of the disclosure to those skilled in the art.

Terms used in the disclosure are used only to describe specific embodiments rather than limiting the scope of the disclosure. Singular forms are intended to include plural forms unless the context clearly indicates otherwise.

In the disclosure, the expressions "have", "may have", "include" or "may include" used herein indicate existence of corresponding features (e.g., elements, such as numeric values, functions, operations, or components), but do not exclude presence of additional features.

In the disclosure, the expressions "A or B", "at least one of A or/and B", or "one or more of A or/and B", and the like may include any and all combinations of one or more of the items listed together. For example, the term "A or B", "at least one of A and B", or "at least one of A or B" may refer to all of the case (1) where at least one A is included, the case (2) where at least one B is included, or the case (3) where both of at least one A and at least one B are included.

Expressions "first", "second", "1st," "2nd," or the like, used in the disclosure may indicate various components regardless of sequence and/or importance of the components, will be used only in order to distinguish one component from the other components, and do not limit the corresponding components.

An expression "~configured (or set) to" used in the disclosure may be replaced by an expression, for example, "suitable for," "having the capacity to," "~designed to," "~adapted to," "~made to," or "~capable of" depending on a situation. A term "~configured (or set) to" may not necessarily mean "specifically designed to" in hardware.

In the disclosure, a 'module' or a 'unit' may perform at least one function or operation, and be implemented as hardware or software or be implemented as a combination of hardware and software. In addition, a plurality of 'modules' or a plurality of 'units' may be integrated into at least one module and be implemented as at least one processor except for a 'module' or a 'unit' that needs to be implemented as specific hardware.

Meanwhile, various elements and regions in the drawings are schematically drawn in the drawings. Therefore, the technical concept of the disclosure is not limited by a relative size or spacing drawn in the accompanying drawings.

Hereinafter, one or more embodiments according to the disclosure will be described with reference to the accompanying drawings so that a person with ordinary knowledge in the technical field to which the disclosure belongs can easily implement the disclosure.

It should be appreciated that the blocks in each flowchart and combinations of the flowcharts may be performed by one or more computer programs which include computer-executable instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g., a central processing unit (CPU)), a communication processor (CP, e.g., a modem), a graphical processing unit (GPU), a neural processing unit (NPU) (e.g., an artificial intelligence (AI) chip), a wireless-fidelity (Wi-Fi) chip, a Bluetooth^{™} chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, a microprocessor unit (MPU), a system on chip (SoC), an IC, or the like.

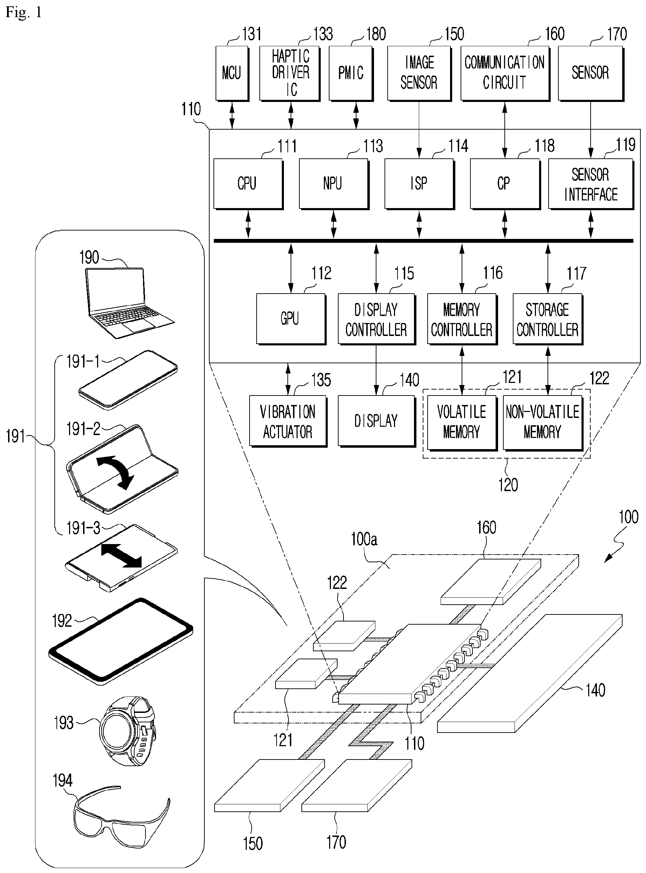

FIG. 1 is a block diagram of an electronic device capable of performing operations according to an embodiment of the disclosure.

Referring to FIG. 1, an electronic device 100 may be one of various forms of electronic devices, such as a notebook 190, smartphones 191 having various form factors (e.g., a bar-type smartphone 191-1, a foldable-type smartphone 191-2, or a sliderable (or rollable)-type smartphone 191-3, a tablet 192, a wearable device (e.g., a smart watch 193, an augmented reality glasses 194), a cellular phone (not shown), and other similar computing devices (not shown). The components, their relationships, and their functions illustrated in FIG. 1 are exemplary only, and do not limit the implementations described or claimed in this document. The electronic device 100 may be referred to as a mobile device, a user device, a multi-function device, a portable device, or a server.

The electronic device 100 includes components comprising at least one processor 110, at least one memory 120 (hereinafter, referred to as memory 120), at least one display 140 (hereinafter, referred to as display 140), at least one image sensor 150 (hereinafter, referred to as image sensor 150), at least one communication circuit 160 (hereinafter, referred to as communication circuit 160), and/or at least one sensor 170 (hereinafter, referred to as sensor 170), a microcontroller unit (MCU) 131, a haptic driver integrated circuitry (HIC) 133, and a power management integrated circuitry (PMIC) 180. The above components are exemplary only. For example, the electronic device 100 may include other components (e.g., an audio processing circuitry, an audio output module, am antenna, a rechargeable battery, or an input/output interfaces). For example, some components may be omitted from the electronic device 100. For example, some components may be integrated into a single component.

The at least one processor 110 may be implemented as one or more integrated circuit (or circuitry) chips, and may execute various data processing. The at least one processor 110 may include at least one electrical circuit, and may individually or collectively distribute and process instructions (or programs, data, etc.) stored in the memory 120. The at least one processor 110 may include a processor assembly comprising one or more processing circuits. The at least one processor 110 may include any processing circuitry that is operative to control the performance and operations of one or more components of the electronic device 100 (e.g., memory 120, MCU 131, haptic driver IC 133, vibration actuator 135, display 140, image sensor 150, communication circuit 160, sensor 170, and/or PMIC 180). For example, the at least one processor 110 (e.g., application processor (AP)) may be implemented as a system on chip (SoC) (e.g., a single chip or chipset). For example, the at least one processor 110 may be implemented as a plurality of cores (or at least one core circuit), a plurality of chips, or a plurality of chipsets. For example, the at least one processor 110 may include one or more processing circuits. For example, the at least one processor 110 may include one or more processing circuits configured to individually and/or collectively perform the various functions of the disclosure. As a non-limiting example, at least a portion of the at least one processor 110 may be included in a first chip of the electronic device 100, and at least a different portion of the at least one processor 110 may be included in a second chip of the electronic device 100, which is different from the first chip of the electronic device 100.

For example, the at least one processor 110 may include a central processing unit (CPU) 111, a graphics processing unit (GPU) 112, a neural processing unit (NPU) 113, an image signal processor (ISP) 114, a display controller 115, memory controller 116, a storage controller 117, a communication processor (CP) 118, and/or a sensor interface 119. Such components of the at least one processor 110 are exemplary only. For example, the at least one processor 110 may further include other components. For example, some components of the at least one processor 110 may be omitted from the at least one processor 110. For example, some components of the at least one processor 110 may be included as separate components of the electronic device 100 outside of the at least one processor 110. For example, some components of the at least one processor 110 (e.g., the memory controller 116) may be included within other components (e.g., at least a portion of the memory 120, an interface (e.g., available for connection to at least one component of the electronic device 100), the display 140, and/or the image sensor 150).

The at least one processor 110 may cause other components of the electronic device 100 to perform various operations by executing instructions stored in the memory 120. The CPU 111 (or central processing circuitry) may be configured to control components of the at least one processor 110 based on execution of instructions stored within the memory 120 (e.g., volatile memory 121 and/or non-volatile memory 122). The GPU 112 (or graphics processing circuitry) may be configured to execute parallel computations (e.g., rendering). The NPU 113 (or neural processing circuitry or artificial intelligence (AI) chip) may be configured to execute computations for an AI model (e.g., convolution computation). The ISP 114 (or image signal processing circuitry) may be configured to process raw images obtained through the image sensor 150 into a format suitable for components within the electronic device 100 or components of the at least one processor 110. The display controller 115 (or display control circuitry or display processing unit (DPU)) may be configured to process images obtained from the CPU 111, the GPU 112, the ISP 114, or the memory 120 (e.g., volatile memory 121) into a format suitable for the display 140. The memory controller 116 (or memory control circuitry) may be configured to control reading data from the volatile memory 121 and writing data to the volatile memory 121. The storage controller 117 (or storage control circuitry) may be configured to control reading data from the non-volatile memory 122 and writing data to the non-volatile memory 122. The CP 118 (communication processing circuitry) may be configured to process data obtained from a component of the at least one processor 110 into a format suitable for transmission through the communication circuit 160 to another electronic device, or to process data obtained through the communication circuit 160 from another electronic device into a format suitable for processing by a component of the at least one processor 110. For example, the communication circuit 160 may include one or more communication circuits. The sensor interface 119 (or sensing data processing circuitry, sensor hub) may be configured to process data about a state of the electronic device 100 and/or a state of the environment surrounding the electronic device 100, obtained through the sensor 170, into a format suitable for a component of the at least one processor 110.

The memory 120 may include one or more storage media (or one or more storage devices). For example, the memory 120 may include memory assembly including one or more storage media. For example, the one or more storage media may include hard drive, flash memory, permanent memory, such as read-only memory (ROM) (e.g., non-volatile memory 122), semi-permanent memory, such as random access memory (RAM) (e.g., volatile memory 121), any other suitable type of storage (or storage assembly), or any combination thereof. The memory 120 may include cache memory which is one or more different types of memory used to temporarily store data for a function or feature of the electronic device 100. As a non-limiting example, the cache memory may be included within the at least one processor 110. The memory 120 may be fixedly embedded within the electronic device 100, or may be incorporated onto one or more suitable types of components (e.g., a subscriber identity module (SIM) card and/or a secure digital (SD) card) that may be repeatedly inserted into and removed from the electronic device 100.

For example, the memory 120 may store one or more software applications, such as an operating system (or system) software application, a firmware software application, a driver software application, a plug-in (e.g., add-in, add-on, and/or applet) software application, and/or any other suitable software application. For example, the one or more software applications may include instructions executable by the at least one processor 110. For example, the memory 120 may store instructions that are callable by an application programming interface (API). For example, the memory 120 may store instructions within a library.

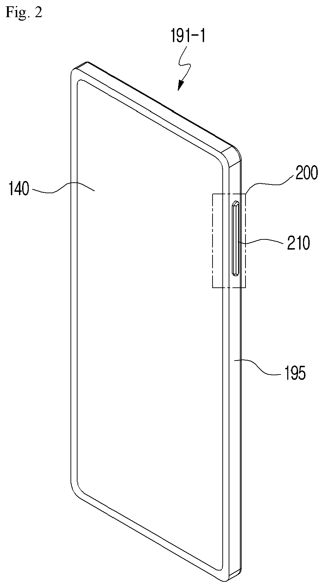

The microcontroller unit (MCU) 131 may control the sensor 170 and input/output devices and perform system management tasks in a low-power state. For example, the MCU 130 may process and control sensor data obtained through accelerometers, gyroscopes, and temperature sensors. The MCU 130 may control buttons (210, 220 in FIG. 2), displays (140 or 240 in FIG. 2) (e.g., touchscreen), and camera modules provided in the electronic device 100. The MCU 130 may perform battery management, power control, and system initialization tasks. The haptic driver IC 133 may be controlled by the processor 110 or the MCU 131 to drive the vibration actuator 135. The haptic driver IC 133 may be referred to as a 'vibration driver IC.' The vibration actuator 135 may be controlled by the haptic driver IC 133 and may provide physical feedback by generating vibration according to one or more vibration patterns. In the disclosure, the haptic driver IC 133 may be referred to as a vibration driver IC (vibration driver integrated circuitry).

The PMIC 180 may perform power management of the electronic device 100. For example, the PMIC 180 may perform power distribution, power conversion, power consumption optimization, battery management, power sequencing, and/or protection functions. According to an embodiment of the disclosure, the PMIC 180 may convert a sensing value (analog data) obtained through the sensor 170 into a vibration pattern (digital data) in a low-current standby state instead of the processor 110 or the MCU 131.

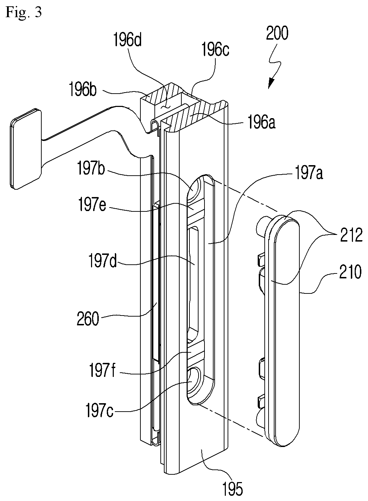

FIG. 2 is a perspective view illustrating a bar-type smartphone 191-1 (hereinafter, referred to as a smartphone 191-1) as the electronic device 100 according to an embodiment of the disclosure. FIG. 3 is a view illustrating a haptic feedback button module 200 provided in the bar-type smartphone 191-1 according to an embodiment of the disclosure.

The haptic feedback button module 200 may be applied to, but is not limited to, the bar-type smartphone 191-1. For example, the haptic feedback button module 200 may be applied to a laptop 190, a foldable smartphone 191-2, a slidable (or rollerable) smartphone 191-3, a tablet 192, a smartwatch 193, or a pair of augmented reality glasses 194.

The haptic feedback button module 200 may transmit a predetermined vibration pattern to the button 210 based on the degree to which the button 210 is pressed (e.g., the amount of pressure applied to the button 210). The button 210 may vibrate according to the vibration pattern to transmit haptic feedback to a part of the user's body (hereinafter, referred to as the user's finger) that is in contact with the button 210.

Referring to FIG. 2, the bar-type smartphone 191-1 (hereinafter, referred to as the smartphone 191-1) may include a housing 195, a display 140 that may be disposed on a front side of the housing 195, and the haptic feedback button module 200 provided on one side of the housing 195.

Most of the configurations included in the haptic feedback button module 200 may be located on the inner side of the housing 195. At least one button 210 (hereinafter, referred to as the button 210) included in the haptic feedback button module 200 may be exposed on the outside of the housing 195 to be pressed by the user's finger.

Referring to FIG. 3, the haptic feedback button module 200 may be disposed in a receiving space 196d provided between an outer portion 196a of the housing 195 and an inner portion 196b of the housing 195 spaced apart from the outer portion 196a of the housing 195. The outer portion 196a and inner portion 196b of the housing 195 may be integrally configured by a connection 196c.

The outer portion 196a of the housing 195 may be provided with a coupling hole 197a into which the button 210 of the haptic feedback button module 200 is movably inserted. The button 210 inserted into the coupling hole 197a may move in a first direction facing the inner portion 196b of the housing 195 and a second direction that is opposite to the first direction (e.g., a direction facing the outer side of the housing 195). The button 210 may move in the first direction to press at least one force sensor 230 located in the receiving space 196d.

A gap may be formed between a side 212 of the button 210 and the coupling hole 197a of the housing 195. The button 210 may be vibrated by vibration generated by a vibration actuator 260 within the coupling hole 197a of the housing 195.

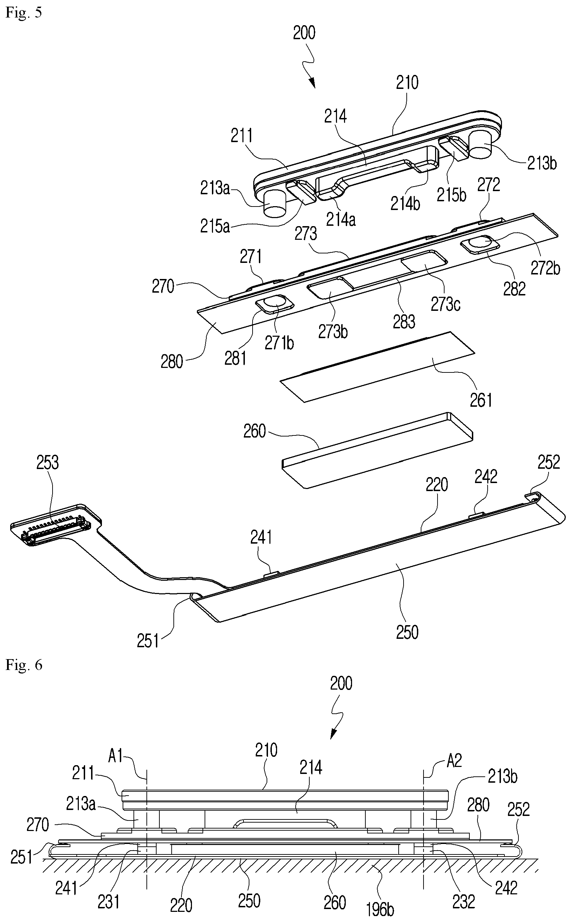

The inner portion 196b of the housing 195 may be provided with a first through-hole 197b, a second through-hole 197c, and a third through-hole 197d that communicate with the coupling hole 197a. A first protrusion 213a of the button 210 may be movably inserted into the first through-hole 197b. A second protrusion 213b of the button 210 may be movably inserted into the second through-hole 197c. A third protrusion of the button 210 (214 in FIG. 5) may be movably inserted into the third through-hole 197d.

The first through-hole 197b, the second through-hole 197c, and the third through-hole 197d may each communicate with the receiving space 196d of the housing 195. Accordingly, the first protrusion 213a and the second protrusion 213b of the button 210 may contact a first force sensor 231 and a second force sensor 232, respectively, and the third protrusion 214 of the button 210 may contact the vibration actuator 260.

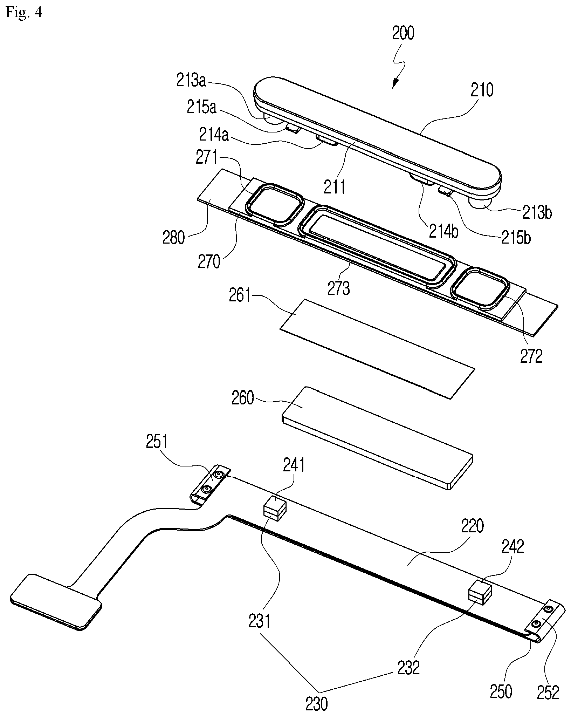

For example, when a waterproof member 270 of FIG. 4 is disposed on the lower surface of the first through-hole 197b, the second through-hole 197c, and the third through-hole 197d, the first protrusion 213a, the second protrusion 213b, and the third protrusion 214 of the button 210 may be located adjacent to the first force sensor 231, the second force sensor 232, and the vibration actuator 260, respectively, with the waterproof member (270 in FIG. 4) interposed therebetween. The third protrusion 214 of the button 210 may have first and second extensions 214a, 214b protruding toward the vibration actuator 260. In this case, the vibration generated by the vibration actuator 260 may be transmitted along the third protrusion 214 of the button 210 to a pressing portion 211 of the button 210.

The button 210 may be made of a metal material, but is not limited thereto. For example, the button 210 may be made of a synthetic resin having rigidity (e.g., engineering plastic). The button 210 may be insert injection molded using different materials. In this case, the button 210 may have the pressing portion 211 made of a metal material and the first, second, and third protrusions 213a, 213b, 214 made of a synthetic resin.

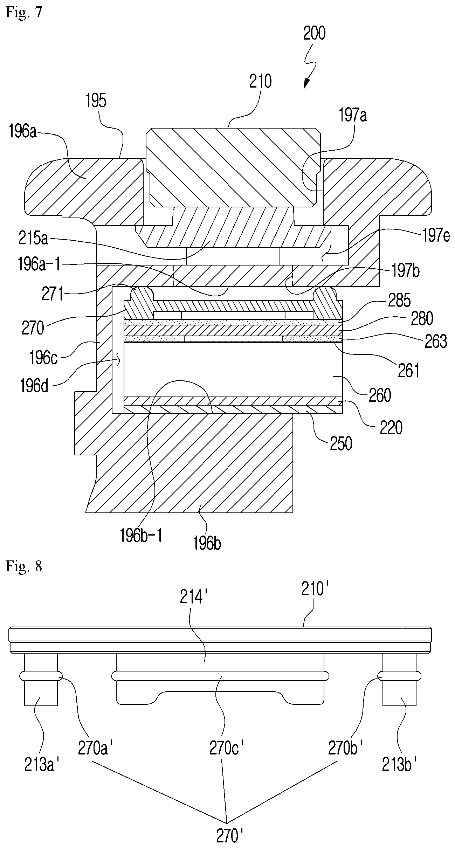

FIGS. 4 and 5 are exploded views illustrating the haptic feedback button module 200 according to various embodiments of the disclosure. FIG. 6 is a cross-sectional view illustrating a stacked structure of configurations including the haptic feedback button module 200 according to an embodiment of the disclosure. FIG. 7 is a cross-sectional view illustrating the haptic feedback button module 200 according to an embodiment of the disclosure.

Referring to FIGS. 4 and 5, the haptic feedback button module 200 may include the button 210, a flexible printed circuit board 220 located in the receiving space 196d of the housing 195, at least one force sensor 230 disposed on the flexible printed circuit board 220, the vibration actuator 260 disposed on the flexible printed circuit board 220, and a waterproof member 270. The at least one force sensor 230 may include the first force sensor 231 and the second force sensor 232.

The button 210 may press the at least one force sensor 230 located on the lower surface of the button 210 when pressed by the user. The button 210 may have a length greater than a spacing between the first force sensor 231 and the second force sensor 232 such that the button 210 can press the first force sensor 231 and the second force sensor 232.

The button 210 is an input interface that allows a command to be entered by pressing the at least one force sensor 230. The button 210 is an output interface that transmits haptic feedback to the user through vibration by the vibration actuator 260. As such, the button 210 may function as both an input interface and an output interface.

The button 210 may include the pressing portion 211 that can be pressed by the user, the first protrusion 213a, the second protrusion 213b, and the third protrusion 214 arranged along a lower surface of the pressing portion 211. The first protrusion 213a and the second protrusion 213b may have the same length and may be disposed parallel to each other. The third protrusion 214 may be located between the first protrusion 213a and the second protrusion 213b.

Referring to FIG. 6, the first protrusion 213a may be located on a coaxial axis A1 with the first force sensor 231 to correspond to the first force sensor 231. The second protrusion 213b may be located on a coaxial axis A2 with the second force sensor 232 to correspond to the second force sensor 232. When the button 210 is pressed, the first protrusion 213a and the second protrusion 213b may press the first force sensor 231 and the second force sensor 232, respectively.

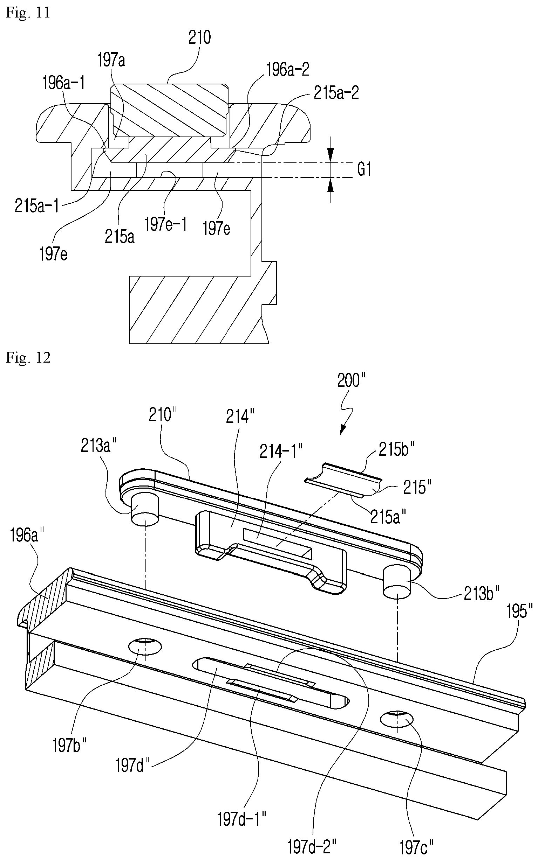

For example, when the upper surface of the pressing portion 211 corresponding to the first protrusion 213a is pressed (see P2 in FIG. 12), the first protrusion 213a can press the first force sensor 231. When the upper surface of the pressing portion 211 corresponding to the second protrusion 213b is pressed (see P4 in FIG. 12), the second protrusion 213b can press the second force sensor 232. When the upper surface of the pressing portion corresponding to a portion between the first protrusion 213a and the second protrusion 213b is pressed (see P3 in FIG. 12), the first protrusion 213a may press the first force sensor 231 and the second protrusion 213b may press the second force sensor 232.

As such, depending on the pressing area among the entire upper surface area of the pressing portion 211, only one of the first force sensor 231 and the second force sensor 232 may obtain pressing motion information, or both the first force sensor 231 and the second force sensor 232 may obtain pressing motion information.

For example, the first protrusion 213a and the second protrusion 213b may contact the first force sensor 231 and the second force sensor 232, respectively. The first protrusion 213a and the second protrusion 213b may directly press the first force sensor 231 and the second force sensor 232, respectively.

For example, the waterproof member 270 may be located between the first protrusion 213a and the second protrusion 213b and the first force sensor 231 and the second force sensor 232. The first protrusion 213a and the second protrusion 213b may indirectly press the first force sensor 231 and the second force sensor 232, respectively, through the waterproof member 270. In this case, the degree of pressing the first force sensor 231 and the second force sensor 232 may vary depending on the degree of rigidity or elasticity of the waterproof member 270.

The third protrusion 214 may be arranged at a location corresponding to the vibration actuator 260. The third protrusion 214 may transmit vibration generated by the vibration actuator 260 to the pressing portion 211. The third protrusion 214 may function as a vibration transmission path. For example, the third protrusion 214 may be in contact with the vibration actuator 260. In this case, the third protrusion 214 may directly receive vibration generated by the vibration actuator 260. The waterproof member 270 may be disposed between the third protrusion 214 and the vibration actuator 260. In this case, the third protrusion 214 may receive vibration generated by the vibration actuator 260 indirectly through the waterproof member 270.

According to an embodiment of the disclosure, the haptic feedback button module 200 may include a first protective member 241 and a second protective member 242 for protecting the first force sensor 231 and the second force sensor 232. The first force sensor 231 and the second force sensor 232 may malfunction or be damaged when the first force sensor 231 and the second force sensor 232 exceed a limit pressure that can be withstand by the first protrusion 213a and the second protrusion 213b of the button 210, respectively. The first protective member 241 and the second protective member 242 may be made of an elastic material.

The first protective member 241 may be disposed between the first force sensor 231 and the first protrusion 213a of the button 210. In this case, the upper surfaces of the first protrusion 213a of the button 210 and the first protective member 241 may be configured to contact each other, thereby implementing a zero gap between the first protrusion 213a of the button 210 and the first protective member 241. The lower surfaces of the first force sensor 231 and the first protective member 241 may be configured to contact each other, thereby implementing a zero gap between the first force sensor 231 and the first protective member 241. In this case, the first protective member 241 may be arranged to be inserted in a pressed state between the first force sensor 231 and the first protrusion 213a of the button 210. As a zero gap is implemented between the first force sensor 231 and the first protrusion 213a of the button 210, the first force sensor 231 may reliably detect the pressing by the first protrusion 213a of the button 210 through the first protective member 241.

The second protective member 242 may be arranged to be inserted in a pressed state between the second force sensor 232 and the second protrusion 213b of the button 210. Thus, the second force sensor 232 may reliably detect the pressing by the second protrusion 213b of the button 210 through the second protective member 242.

The first protective member 241 may be arranged to be inserted in a pressed state between the first force sensor 231 and the first protrusion 213a of the button 210, but is not limited thereto. For example, the first protective member 241 may be disposed between the first force sensor 231 and the first protrusion 213a of the button 210 such that a lower surface of the first protective member 241 is in contact with the first force sensor 231 and a upper surface of the first protective member 241 is in contact with the first protrusion 213a of the button 210, thereby substantially no pressure being applied to the first protective member 241. The second protective member 242 may be disposed between the second force sensor 232 and the second protrusion 213b of the button 210 such that a lower surface of the second protective member 242 is in contact with the second force sensor 232 and a upper surface of the second protective member 242 is in contact with the second protrusion 213b of the button 210, thereby substantially no pressure being applied to the second protective member 242. Under such an arrangement, the first force sensor 231 may reliably detect the pressing by the first protrusion 213a of the button 210 through the first protective member 241. The second force sensor 232 may reliably detect the pressing by the second protrusion 213b of the button 210 through the second protective member 242.

The flexible printed circuit board 220 may include a connector 253 at one end. The flexible printed circuit board 220 may be electrically connected to a main printed circuit board (100a in FIG. 1). The processor 110, the memory 120, the MCU 131, the haptic driver IC 133, and the PMIC 180 may be arranged on the main printed circuit board (100a in FIG. 1). The processor 110 may control the vibration actuator 260 of the haptic feedback button module 200 to be driven based on a sensing value obtained by the first and second force sensors 231, 232 of the haptic feedback button module 200.

The vibration actuator 260 may be disposed on the flexible printed circuit board 220. Since the flexible printed circuit board 220 has ductility, the electronic components placed on the flexible printed circuit board 220 may improve or minimize fatigue failure in which cracks appear in solder portions and electrical connections are disconnected due to vibration generated by the vibration actuator 260. For example, the electronic components placed on the flexible printed circuit board 220 may include the first force sensor 231, the second force sensor 232, a resistor for driving the first and second force sensors 231, 232, a capacitor, and an analog front end (AFE) that is an integrated circuit component that converts an analog sensing value into I2C communication.

The vibration actuator 260 may generate vibration corresponding to a power pattern transmitted from the processor 110, the MCU 131, or the PMIC 180. The third protrusion 214 of the button 210 may transmit the vibration generated by the vibration actuator 260 to the pressing portion 221 of the button 210. In this case, the vibration may be transmitted to the user's finger in contact with the pressing portion 211 of the button 210.

The vibration actuator 260 may include a piezo actuator (or piezoelectric ceramic, piezoelectric element). The piezoelectric actuator may obtain a piezoelectric effect that converts mechanical energy into electrical energy and a reverse piezoelectric effect that converts electrical energy into mechanical energy. According to an embodiment of the disclosure, the piezoelectric actuator may generate vibration by using the reverse piezoelectric effect. When electricity is applied, the piezo actuator vibrates by repeating contraction and expansion

The vibration actuator 260 may be located between the first force sensor 231 and the second force sensor 232. The vibration actuator 260 may be disposed on the same side of the flexible printed circuit board 220 together with the first force sensor 231 and the second force sensor 232.

The vibration actuator 260 may be disposed as close as possible to the button 210 inside the housing 195. For example, the vibration actuator 260 may be disposed in direct contact with the third protrusion 214 of the button 210 or adjacent thereto with the waterproof member 270 therebetween.

As the vibration actuator 260 is disposed adjacent to the third protrusion 214 of the button 210, the haptic feedback button module 200 may vibrate the button 210 within the shortest time (e.g., within several tens of ms) by the vibration actuator 260 that operates after the button 210 is pressed. The haptic feedback button module 200 may immediately transmit the vibration to the button 210 through the vibration actuator 260 almost simultaneously with the pressing of the button 210 (with an extremely short time difference). Therefore, the haptic feedback button module 200 may transmit vivid and intuitive haptic feedback to the user's finger.

The waterproof member 270 may improve or block the inflow of liquid (e.g., water, sweat, or foreign substances) into the inside of the housing 195 through the coupling hole 197a into which the button 210 is inserted in the haptic feedback button module 200. The waterproof member 270 may be made of an elastic material (e.g., rubber or sponge).

The waterproof member 270 may be disposed in the receiving space 196d of the housing 195. The upper surface of the waterproof member 270 may be in close contact with the lower surface of the outer portion 196a of the housing 195 in a watertight manner. In this case, a first rib 271, a second rib 272, and a third rib 273 may be disposed at intervals along the longitudinal direction of the waterproof member 270 on the upper surface of the waterproof member 270. The first rib 271, the second rib 272, and the third rib 273 may each be configured in a closed loop shape.

The first rib 271 may be in close contact with the lower surface of the outer portion 196a of the housing 195 and surround the periphery of the first through-hole (197b in FIG. 3) (see FIG. 7). The second rib 272 may be in close contact with the lower surface of the outer portion 196a of the housing 195 and surround the periphery of the second through-hole (197c in FIG. 3). The third rib 273 may be in close contact with the lower surface of the outer portion 196a of the housing 195 and surround the periphery of the third through-hole (197d in FIG. 3).

A first support plate 280 may have first, second, and third holes 281, 282, 283 formed such that a plurality of contacts 271b, 272b, 273b, 273c protruding from the lower surface of the waterproof member 270 penetrate the first support plate 280 and come into contact with the first force sensor 231, the second force sensor 232 and the vibration actuator 260.

The plurality of contacts 271b, 272b, 273b, 273c of the waterproof member 270 may include the first contact 271b corresponding to the first force sensor 231, the second contact 272b corresponding to the second force sensor 232, and the third and fourth contacts 273b, 273c corresponding to the vibration actuator 260. When the first protective member 241 is provided on the first force sensor 231, the first contact 271b may be in contact with the first protective member 241. When the second protective member 242 is provided on the second force sensor 232, the second contact 272b may be in contact with the second protective member 242. Since the waterproof member 270 is in contact with the vibration actuator 260 without a gap through the third and fourth contacts 273b, 273c, vibration generated by the vibration actuator 260 may be smoothly transmitted to the waterproof member 270.

The first support plate 280 may be supported at both ends by a second support plate 250 that supports the flexible printed circuit board 220. For example, as shown in FIG. 6, the second support plate 250 may be provided with a first bending portion 251 and a second bending portion 252 at each end. The first bending portion 251 and the second bending portion 252 of the second support plate 250 may be bent toward the upper surface of the second support plate 250. The first support plate 280 may be spaced from the second support plate 250 by the first bending portion 251 and the second bending portion 252 of the second support plate 250.

Referring to FIG. 7, the waterproof member 270 may be supported by the first support plate 280 having rigidity. The first support plate 280 may be bonded to the lower surface of the waterproof member 270 through an adhesive 285. The adhesive 285 may be, for example, a double-sided tape. A third support plate 261 may be mounted on the upper surface of the vibration actuator 260. The third support plate 261 may be bonded to the lower surface of the first support plate 280 by an adhesive 263. The vibration actuator 260 may be disposed between the flexible printed circuit board 220 and the third support plate 261.

The waterproof member 270 of the haptic feedback button module 200 is configured in a roughly plate shape and includes the first rib 271, the second rib 272, and the third rib 273 that are in close contact with the lower surface of the outer portion 196a of the housing 195 in a watertight manner. The waterproof member 270 of the haptic feedback button module 200 is not limited to the above structure and arrangement. Hereinafter, a waterproof member 270' of a haptic feedback button module 200' will be described with reference to the drawings.

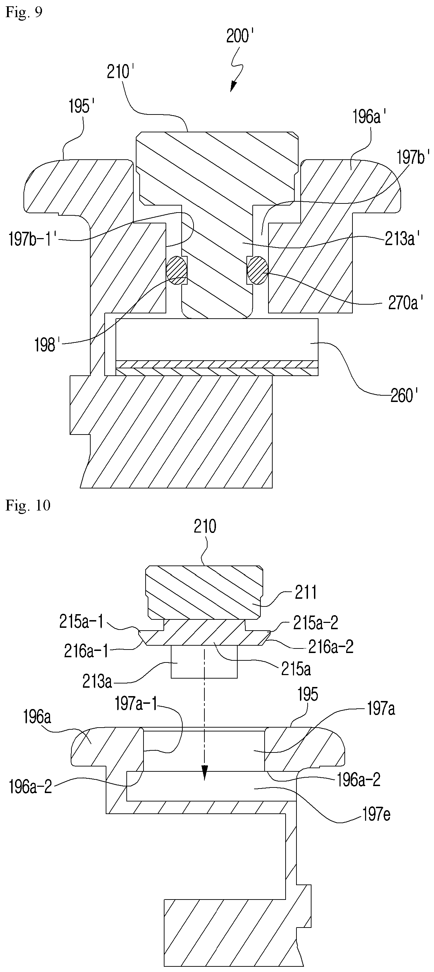

FIG. 8 is a view illustrating a waterproof member coupled to a button of a haptic feedback button module according to an embodiment of the disclosure. FIG. 9 is a cross-sectional view illustrating a waterproof structure of a haptic feedback button module according to an embodiment of the disclosure.

Referring to FIGS. 8 and 9, the haptic feedback button module 200' may include a ring-shaped waterproof member 270'. The waterproof member 270' may include a first seal ring 270a', a second seal ring 270b', and a third seal ring 270c' that are coupled to a first protrusion 213a', a second protrusion 213b', and a third protrusion 214' of the button 210', respectively.

The first seal ring 270a' may be coupled to a fixing groove 198' formed along an outer circumferential surface of the first protrusion 213a' of the button 210'. The first seal ring 270a' may be inserted into a first through-hole 197b' provided in an outer portion 196a' of a housing 195' together with the first protrusion 213a' of the button 210'. The first seal ring 270a' may be in close contact with an inner circumferential surface 197b-1' of the first through-hole 197b' in a watertight manner. The second seal ring 270b' and the third seal ring 270c' may be disposed in the second through-hole and the third through-hole provided on the outer portion 196a' of the housing 195', respectively, in a watertight manner.

The first seal ring 270a', the second seal ring 270b', and the third seal ring 270c' may be made of an elastic material so as not to interfere with the pressing motion or vibration of the button 210'.

As such, when the waterproof member 270' includes the first, second, and third seal rings 270a', 270b', 270c', each of the first, second, and third protrusions 213a', 213b', 214' of the button 210' may be in direct contact with the vibration actuator 260'.

FIGS. 10 and 11 are views illustrating a button of a haptic feedback button module before and after it is inserted into a coupling hole of a housing, respectively, according to various embodiments of the disclosure.

Referring to FIG. 10, the button 210 of the haptic feedback button module 200 may be coupled to the housing 195 from the outside of the housing 195. For example, the button 210 may be coupled to the housing 195 by first and second coupling members 215a, 215b fixed to the lower surface of the pressing portion 211 of the button 210.

The first coupling member 215a may be disposed adjacent to the first protrusion 213a of the button 210, and the second coupling member 215b may be disposed adjacent to the second protrusion 213b of the button 210 (see FIG. 5). The first and second coupling members 215a, 215b may be made of an elastic material so that they can be snap-fitted into the coupling hole 197a of the housing 195.

The first coupling member 215a may be provided with first and second hooks 215a-1, 215a-2 on both sides. The first and second hooks 215a-1, 215a-2 may be provided with slidable inclined surfaces 216a-1, 216a-2 along an inner circumferential surface 197a-1 of the coupling hole 197a of the housing 195 so that they can smoothly pass through the coupling hole 197a of the housing 195. The second coupling member 215b may be configured substantially the same as the first coupling member 215a.

Referring to FIG. 11, the button 210 may be coupled to the coupling hole 197a of the housing 195 from the outside of the housing 195. The first coupling member 215a may pass through the coupling hole 197a of the housing 195 and be coupled to a fixing hole 197e. The first and second hooks 215a-1, 215a-2 of the first coupling member 215a may interfere with periphery 196a-1, 196a-2 of the coupling hole 197a of the housing 195. Accordingly, the button 210 may not be separated from the housing 195.

A first gap G1 may be formed between the lower surface of the first coupling member 215a and the bottom surface of the first fixing hole 197e. The first gap G1 may be a space in which the button 210 may move inwardly of the housing 195. Accordingly, the button 210 may move inwardly of the housing 195 by the force with which the user presses the button 210 to press the first and second force sensors 231, 232. The second coupling member 215b may be coupled to a second fixing hole 197f in substantially the same manner as the first coupling member 215a is coupled to the first fixing hole 197e.

The manner in which the button 210 is coupled to the coupling hole 197a of the housing 195 is not limited to the method of using the first and second coupling members 215a, 215b. Hereinafter, examples of connecting the button 210 to the coupling hole 197a of the housing 195 will be described with reference to the drawings.

The button 210 may be elastically supported outside the housing 195 by the waterproof member 270. When the button 210 is released from being pressed by the user, the button 210 moves from the inside of the housing 195 to the outside of the housing 195 by the elasticity of the waterproof member 270. In this case, the button 210 may not be separated from the coupling hole 197a of the housing 195 by the first and second coupling members 215a, 215b.

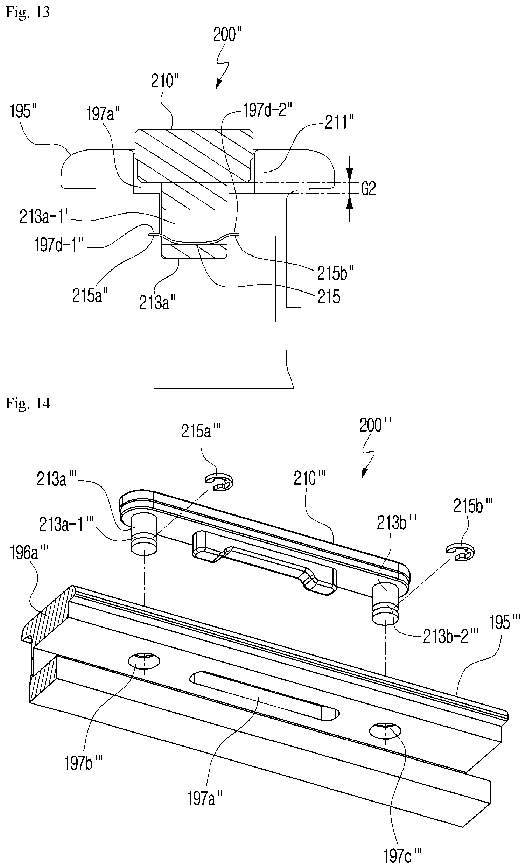

FIGS. 12 and 13 are views illustrating a button 210of a haptic feedback button module before and after it is inserted into a coupling hole of a housing, respectively, according to various embodiments of the disclosure.

Referring to FIG. 12, the button 210" of the haptic feedback button module 200" may include a coupling member 215". The coupling member 215" may be inserted into an insertion holes 213a-1" provided in a third protrusion 214" of the button 210". The coupling member 215" may include a left spring. In FIG. 12, unexplained reference numeral 197b" denotes a first through-hole, 197c" denotes a second through-hole, 213a" denotes a first protrusion, and 213b" denotes a second protrusion.

Referring to FIG. 13, when the button 210" is coupled to the coupling hole 197a" of the housing 195", the coupling member 215" may be snap-fitted into the lower surface of an outer portion 216a" of the housing 210". The coupling member 215" may be inserted into an insertion hole 214-1" of a third protrusion 214", and both ends 215a", 215b" of the coupling member 215" may be fixed to fixing grooves 197d-1", 197d-2" provided on the lower surface of the outer portion 216a" of the housing 195", respectively. The fixing grooves 197d-1", 197d-2" may be provided around a third through-hole 197d".

The button 210" may be elastically supported in the coupling hole 197a" of the housing 195" by the coupling member 215". A second gap G2 may be provided between the lower surface of a pressing portion 211" of the button 210" and the bottom surface of the coupling hole 197a" of the housing 195". The button 210" may be pressed smoothly using the free space of the second gap G2, and when the user's pressing is released, may be returned to its original position by the elasticity of the coupling member 215".

According to an embodiment of the disclosure, the coupling member 215" is not limited to a leaf spring shape. For example, the coupling member 215" may include a first coil spring and a second coil spring. The first coil spring may have one end fixed to the periphery of the first protrusion 231a" of the button and the coupling hole 197d" of the housing 195". The second coil spring may have one end fixed to the periphery of the second protrusion 231b" of the button 210" and the coupling hole 197d" of the housing 195".

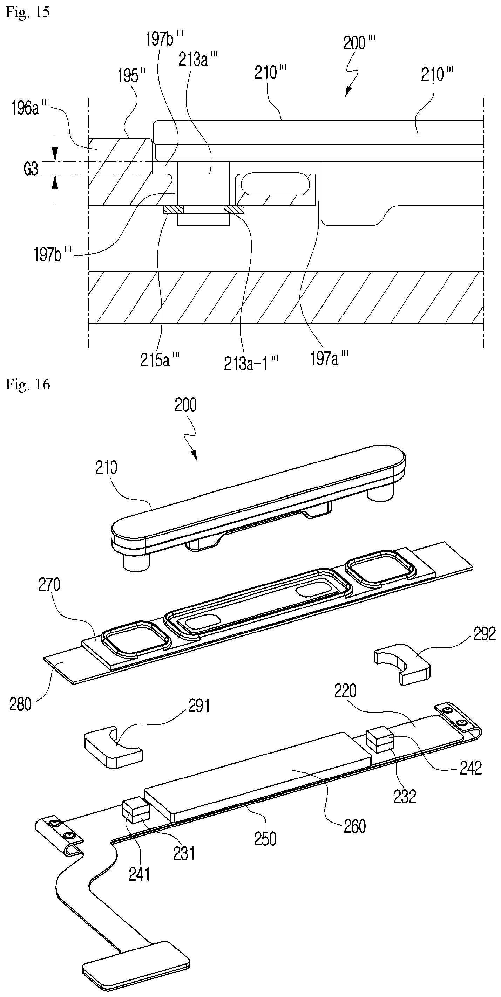

FIGS. 14 and 15 are views illustrating a button of a haptic feedback button module 2before and after it is inserted into a coupling hole of a housing, respectively, according to various embodiments of the disclosure.

Referring to FIG. 14, the button 210"' of the haptic feedback button module 200"' may include first and second coupling members 215a"', 215b"'. The button 210"' is not separated outwardly of the housing 195'" from the coupling hole 197a"' of the housing 195"' by the first and second coupling members 215a'", 215b"'.

The first and second coupling members 215a'", 215b"' may be configured as snap rings (or E-rings). The outer circumference of a first protrusion 213a'" of the button 210'" may be provided with a first coupling groove 213a-1"' to which the first coupling member 215a''' is coupled. The outer circumference of a second protrusion 213b"' of the button 210"' may be provided with a second coupling groove 213b-1"' to which the second coupling member 215b"' is coupled.

Referring to FIG. 15, after inserting the first protrusion 213a'" of the button 210‴ into a second through-hole 197b"' provided in an outer portion 196a"' of the housing 195"', the first coupling member 215a'" may be connected to the first coupling groove 213a-1"' of the first protrusion 213a"' of the button 210"'. The second coupling member 215b"' may be coupled to the second coupling groove 213b-1'" of the second protrusion 213b‴ of the button 210'" inserted into a third through-hole 197c'" of the housing 195"'. The first coupling members 215a"', 215b'" may interfere with the lower surface of the outer portion 196a"' of the housing 195"', i.e., the periphery of the second and third through-holes 197b"', 197c'". Accordingly, the button 210"' may not be separated from the housing 195'".

The button 210"' may be elastically supported on the outer portion 196a'" of the housing 195'" by the waterproof member (270 of FIG. 4) while being inserted into the first coupling hole 197a"' of the housing 195"'. In this case, a third gap G3 may be provided between the lower surface of the pressing portion 211'" of the button 210"' and the lower surface of the outer portion 196a'" of the housing 195"'. The button 210"' may be smoothly pressed using the free space of the third gap G3, and when the user's pressing is released, may be returned to its original position by the elasticity of the waterproof member (270 of FIG. 4).

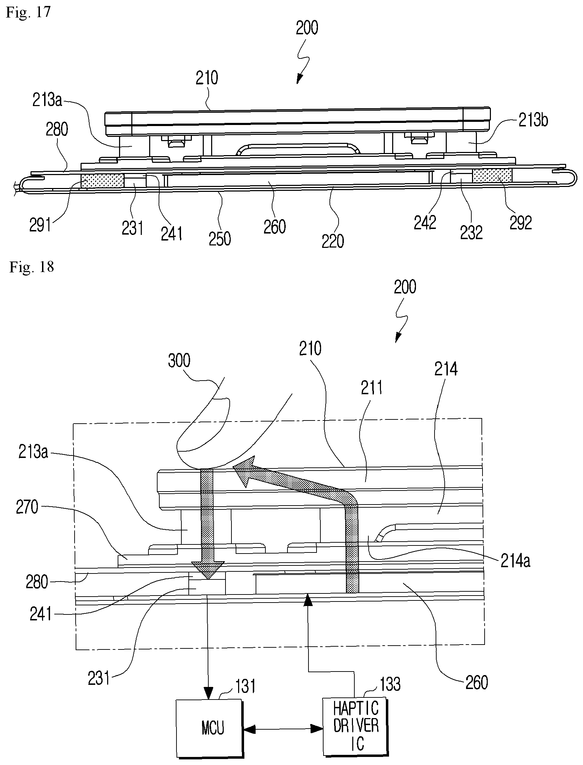

FIG. 16 is a view illustrating a haptic feedback button module includes a plurality of spacers according to an embodiment of the disclosure. FIG. 17 is a view illustrating a waterproof member is in close contact with a housing by a plurality of spacers according to an embodiment of the disclosure.

The second support plate 250 mounted on the upper surface of the inner portion 196b of the housing 195 may have a predetermined thickness such that the waterproof member 270 is in close contact with the lower surface of the outer portion 196a of the housing 195. For example, when the thickness of the second support plate 250 is smaller than the predetermined thickness, the waterproof member 270 may be loosely in contact with or spaced from the lower surface of the outer portion 196a of the housing 195.

Referring to FIG. 16, the haptic feedback button module 200 may include a first spacer 291 and a second spacer 292 to allow the waterproof member 270 to be firmly in contact with the lower surface of the outer portion 196a of the housing 195.

Referring to FIG. 17, the first and second spacers 291, 292 may be located between the first support plate 280 and the second support plate 250. The first spacer 291 may be located adjacent to the first force sensor 231. In this case, the first spacer 291 may be located such that it does not overlap with the first hole (281 in FIG. 5) of the first support plate 280 so as not to interfere with the movement of the first protrusion 213a toward the first force sensor 231. The second spacer 292 may be located adjacent to the second force sensor 232. The second spacer 292 may be located such that it does not overlap with the second hole (282 in FIG. 5) of the first support plate 280 so as not to interfere with the movement of the second protrusion 213b of the button 210 toward the second force sensor 232.

The thickness of the first and second spacers 291, 292 may be greater than that of the second support plate 250. For example, the thickness of the first and second spacers 291, 292 may be greater than the thickness of the first and second force sensors 231, 232 or greater than the thickness of the vibration actuator 260.

The first and second spacers 291, 292 may be inserted between the first support plate 280 and the second support plate 250 to press the waterproof member 270 to the lower surface of the outer portion 196a of the housing 195 to improve the waterproofing performance of the waterproof member 270.

According to an embodiment of the disclosure, the haptic feedback button module 200 may instantaneously vibrate the button 210 in response to the user's button pressing motion, allowing the user to feel vivid and intuitive haptic feedback. Hereinafter, the operation of the haptic feedback button module 200 according to an embodiment of the disclosure, will be described with reference to the drawings.

The haptic feedback button module 200 may adjust the volume output from a sound module (not shown) included in the smartphone 191-1. However, the haptic feedback button module 200 is not limited to performing volume control, but may perform a variety of other functions, such as powering on and off, selecting and executing an app shown on the display (140 in FIG. 2), swiping, and/or performing a half-shutter function.

FIG. 18 illustrates a haptic feedback operation of a haptic feedback button module according to an embodiment of the disclosure.

Referring to FIG. 18, when the button 210 is pressed by the user's finger 300, the first protrusion 213a of the button 210 presses the first force sensor 231. In this case, the waterproof member 270 and the first protective member 241 are pressed toward the first force sensor 231 by the first protrusion 213a of the button 210.

The first force sensor 231 converts the pressure exerted by the button 210 into an electrical signal corresponding to the pressure being applied. Here, the electrical signal may be referred to as input data.

The MCU 131 may identify input information based on the input data obtained (or detected) by the first force sensor 231. The MCU 131 may generate a vibration pattern based on the input information. The MCU 131 may control the haptic driver IC 133 to supply power to the vibration actuator 260 based on the vibration pattern. The vibration actuator 260 may vibrate according to the power pattern transmitted from the haptic driver IC 133.

The instructions stored in the memory 120 may include instructions for generating a vibration pattern based on input data obtained (or detected) by the first force sensor 231, and instructions for providing a power pattern corresponding to the vibration pattern to the vibration actuator 260.

The vibration generated by the vibration actuator 260 is transmitted to the third protrusion 214 of the button 210. The third protrusion 214 of the button 210 is a path for transmitting the vibration to the pressing portion 211 of the button 210 that is in contact with the user's finger 300. The vibration of the button 210 may be transmitted to the user's finger 300 that is in contact with pressing portion 211 of the button 210. As such, the haptic feedback button module 200 may provide haptic feedback to the user immediately by vibrating the button 210 within a very short time (e.g., within several tens of ms) after the user presses the button 210. For example, the path of vibration generated by the vibration actuator 260 may sequentially lead to the first support plate 280, the waterproof member 270, the third protrusion 214 of the button 210, and the pressing portion 211 of the button 210.

The button pressing motions by the user may have various patterns. For example, the pressing motions may include a single press for a predetermined period of time, two or more presses for a predetermined period of time, two or more presses for a second period of time that is shorter than a first period of time, two or more presses for a third period of time that is longer than the first period of time, two or more presses with different pressures for a predetermined period of time, a press in a half-shutter motion for a predetermined period of time, and a swipe (pressing the pressing portion 211 of the button 210 while moving along the longitudinal direction of the button 210). For example, pressing the button 210 once for a predetermined period of time may increase or decrease the sound volume by a predetermined amount of units. Pressing the button 210 more than once for a predetermined period of time (e.g., two double clicks in one second) may change the sound volume to mute. Pressing the button 210 two or more times for the second time period that is shorter than the first time period may cause an emergency call to be made to a predetermined phone number (e.g., emergency phone number 112 or 119). Pressing the button 210 two or more times for the third time period that is longer than the first period of time may turn the screen of the display on or off. When the button 210 is pressed with different pressures two or more times for a predetermined period of time, a predetermined application may be driven. In this case, when the button 210 is pressed with a pressure pattern, for example, strong and weak pressure, a map application may be driven, and when the button 210 is pressed with weak, weak and strong pressure, a phone application may be driven. When the button 210 is pressed in a half-shutter motion for a predetermined period of time in a camera shooting mode, a subject can be focused. When the button 210 is swiped along the longitudinal direction of the button 210, the screen may be scrolled in the swiped direction. While the haptic feedback is performed by the haptic feedback button module 200, the processor 110 may control to increase the sound output of the audio output module included in the smartphone (191-1 in FIG. 2) based on input data detected by the first force sensor 231 received from the MCU 131. The processor 110 may control to decrease the sound output of the audio output module of the smartphone (191-1 of FIG. 2) based on input data detected by the second force sensor 232 received from the second MCU 131.

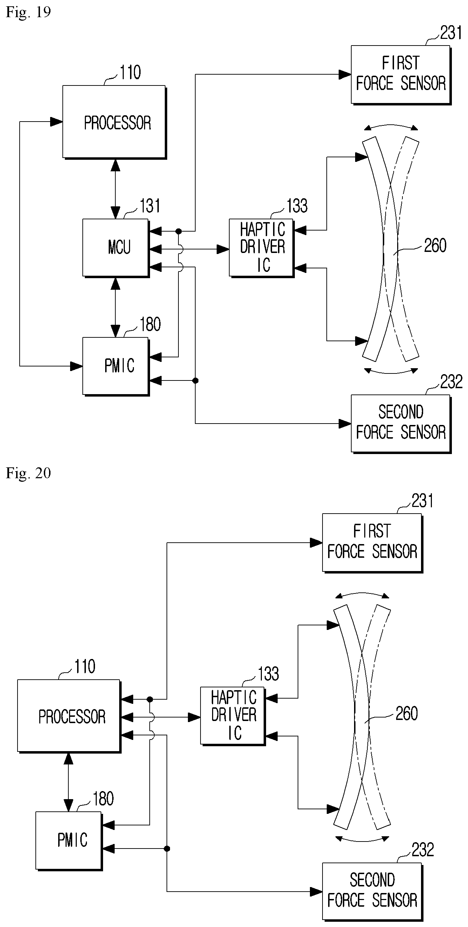

FIG. 19 is a block diagram illustrating configuration for performing a haptic feedback operation according to an embodiment of the disclosure.

Referring to FIG. 19, the haptic feedback operation may be controlled by the processor 110 (e.g., application processor (AP)). For example, the MCU 131 may transmit input data detected by the first force sensor 231 and/or the second force sensor 232 to the processor 110.

The processor 110 may identify input information based on the input data transmitted from the MCU 131. The processor 110 may generate a power pattern based on the input information. The processor 110 may transmit the power pattern to the haptic driver IC 133 through the MCU 131. The haptic driver IC 133 may transmit an electrical signal corresponding to the power pattern to the vibration actuator 260. The vibration actuator 260 may vibrate in a pattern corresponding to the electrical signal.

In addition to controlling the haptic driver IC 133, the processor 110 may also control the audio output module included in the smartphone (191-1 in FIG. 2) to increase or decrease the sound output based on the input data detected by the first force sensor 231 and/or the second force sensor 232.

According to an embodiment of the disclosure, the PMIC 180 may be electrically coupled to the first force sensor 231 and the second force sensor 232 to process haptic feedback corresponding to a pressing motion input through the button (210 in FIG. 2) while the smartphone (191-1 in FIG. 2) is in a low-power standby state.

The PMIC 180 may obtain input data detected by the first force sensor 231 and/or the second force sensor 232. The MCU 131 can control the haptic driver IC 133 to identify the input information based on the input data received from the PMIC 180, generate a vibration pattern based on the input information, and supply power to the vibration actuator 260 based on the vibration pattern.

FIG. 20 is a block diagram illustrating configuration for performing a haptic feedback operation according to an embodiment of the disclosure.

According to an embodiment of the disclosure, the processor 110 may control the haptic feedback button module 200 without going through the MCU (131 in FIG. 19).

Referring to FIG. 20, the processor 110 may obtain input data detected by the first force sensor 231 and the second force sensor 232. The processor 110 may generate a vibration pattern based on the input data, control the haptic driver IC 133 to supply power to the vibration actuator 260 based on the vibration pattern, and control the audio output module included in the smartphone (191-1 in FIG. 2) to increase or decrease the sound output.

According to an embodiment of the disclosure, the PMIC 180 may be electrically coupled to the first force sensor 231 and the second force sensor 232 to process haptic feedback corresponding to a pressing motion input through the button (210 in FIG. 2) while the smartphone (191-1 in FIG. 2) is in a low-power standby state.

The PMIC 180 may obtain input data detected by the first force sensor 231 and/or the second force sensor 232. The processor 110 may identify input information based on the input data received from the PMIC 180, generate a vibration pattern based on the input information, and control the haptic driver IC 133 to supply power to the vibration actuator 260 based on the vibration pattern.

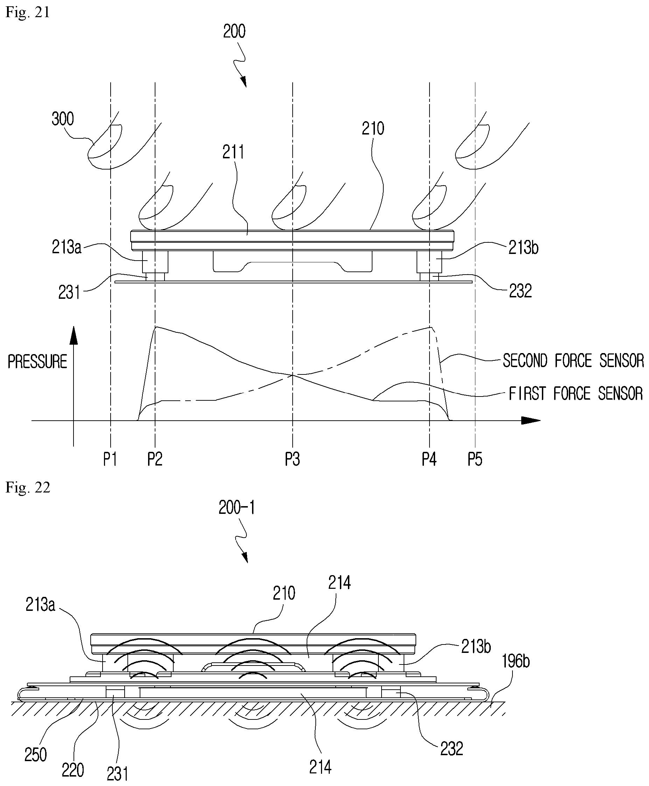

FIG. 21 is a view illustrating an operation of a first force sensor and a second force sensor according to a method of pressing a button of the haptic feedback button module 200 according to an embodiment of the disclosure.

Depending on how the button 210 is pressed by a user's finger 300 in a first position P1 in the entire upper surface area of the pressing portion 211 of the button 210, either or both of the first force sensor 231 and the second force sensor 232 may obtain information about the user's pressing motion. For example, when an area corresponding to the first force sensor 231 or adjacent to the first force sensor 231 in the entire upper surface area of the pressing portion 211 of the button 210 is pressed, pressing motion information may be obtained through the first force sensor 231. When an area corresponding to the second force sensor 232 or adjacent to the second force sensor 232 in the entire upper surface area of the pressing portion 211 of the button 210 is pressed, pressing motion information may be obtained through the second force sensor 232. When an area located between the first force sensor 231 and the second force sensor 232 in the entire upper surface area of the pressing portion 211 of the button 210 is pressed, pressing motion information may be obtained through each of the first force sensor 231 and the second force sensor 232.

Referring to FIG. 21, the haptic feedback button module 200 may obtain a pressing motion for the entire upper surface area of the pressing portion 211 of the button 210 from second position P2 to fourth position P4.

The processor 110 or the MCU 131 may track the position of the user's finger 300 (e.g., coordinates in the entire upper surface area of the pressing portion 211) and the movement of the user's finger 300 through the amount of pressure or charge input to the first force sensor 231 and the second force sensor 232 by the pressing motion of the button 210. Accordingly, the processor 110 or the MCU 131 may obtain, a pressing motion of the button (one click, two or more consecutive clicks, one short press, one long press, two or more presses with different pressures, a swipe, etc.) through the haptic feedback button module 200.

For example, the user may swipe while pressing the button 210 with a predetermined pressure from the second position P2 to the fourth position P4 on the upper surface of the pressing portion 211 of the button 210 without removing the finger 300. In this case, the pressure input to the first force sensor 231 may be detected as a first pressure value when the finger 300 is at the second position P2, a second pressure value smaller than the first pressure value when the finger 300 is at the third position P3, and a third pressure value smaller than the second pressure value when the finger 300 is at the fourth position P4. In this case, the pressure input to the second force sensor 232 may be detected as a fourth pressure value when the finger 300 is at the second position P2, a fifth pressure value greater than the fourth pressure value when the finger 300 is at the third position P3, and a sixth pressure value greater than the fifth pressure value when the finger 400 is at the fourth position P4. Here, the first pressure value may be substantially the same or similar to the sixth pressure value, the second pressure value may be substantially the same or similar to the fifth pressure value, and the third pressure value may be substantially the same or similar to the fourth pressure value.

As such, when the user swipes from the second position P2 to the fourth position P4, the pressure detected by the first force sensor 231 and the pressure detected by the second force sensor 232 may be inversely proportional. The processor 110 or the MCU 131 may determine that the user's pressing motion is a swipe based on the pressure value input to the first force sensor 231 and the second force sensor 232.

The pressure value input to the first force sensor 231 and/or the second force sensor 232 may vary depending on the degree to which the button 210 of the haptic feedback button module 200 is pressed (magnitude of pressure). For example, when the button 210 is pressed strongly, the pressure value input to the first force sensor 231 and/or the second force sensor 232 increases, and conversely, when the button 210 is pressed weakly, the pressure value input to the first force sensor 231 and/or the second force sensor 232 decreases. Based on these pressure values, various pressing motions may be defined. The memory 120 may store instructions corresponding to the various pressing motions.

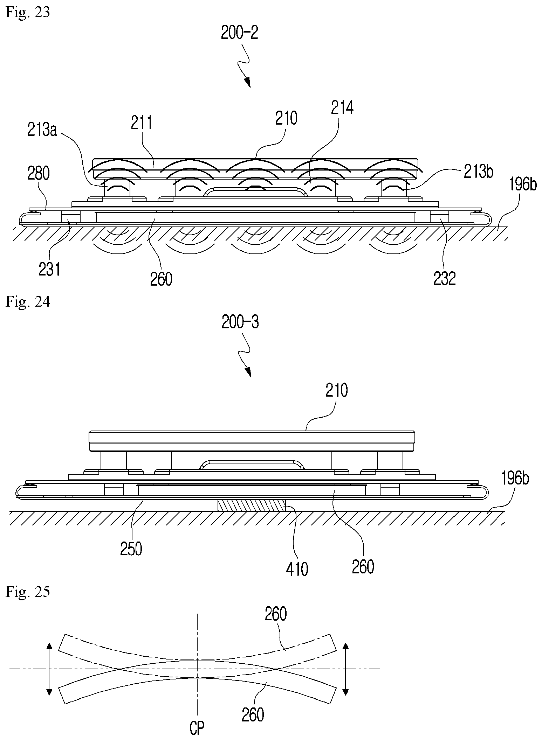

FIGS. 22 and 23 are views illustrating a vibration pattern of a button according to a length of a vibration actuator of a haptic feedback button modules according to various embodiments of the disclosure.

Referring to FIG. 22, the length of the vibration actuator 260 of the haptic feedback button module 200-1 may be greater than the length of the third protrusion 214 of the button 210. Both ends of the vibration actuator 260 may be adjacent to the first protrusion 213a and second protrusion 213b of the button 210, respectively. The first force sensor 231 may be located coaxially with the first protrusion 213a of the button 210, and the second force sensor 232 may be located coaxially with the second protrusion 213b of the button 210.

The vibration actuator 260 may be located on the upper surface of the lower portion 196b of the housing. In this case, the flexible printed circuit board 220 and the second support plate 250 are sequentially disposed on the lower side of the vibration actuator 260. The second support plate 250 may be mounted on the upper surface of the lower portion 196b of the housing. Accordingly, the vibration actuator 260 may be disposed such that the bottom surface thereof is approximately parallel to the upper surface of the lower portion 196b of the housing.

The vibration actuator 260 vibrates according to the power pattern transmitted from the haptic driver IC (133 in FIG. 1). The vibration pattern that appears on the button 210 may be a pattern in which the left (e.g., the side of the first protrusion 213a), center, and right (e.g., the side of the second protrusion 213b) of the button 210 vibrate uniformly, as shown in FIG. 22. The vibration transmitted from the vibration actuator 260 to the lower portion 196b of the housing may be reflected toward the button 210. Accordingly, the vibration intensity from the vibration actuator 260 toward the button 210 may be greater than the vibration intensity toward the lower portion 196b of the housing.

Referring to FIG. 23, the length of the vibration actuator 260 of the haptic feedback button module 200-2 may be greater than the length of the third protrusion 214 of the button 210. In this case, both ends of the vibration actuator 260 may extend to the lower side of the first protrusion 213a and the second protrusion 213b of the button 210, respectively. Thus, the first, second, and third protrusions 213a, 213b, 214 of the button 210 may be stacked on the vibration actuator 260.

The vibration actuator 260 vibrates according to the power pattern transmitted from the haptic driver IC (133 in FIG. 1). The vibration generated by the vibration actuator 260 may be transmitted to the pressing portion 211 of the button 210 along the first, second, and third protrusions 213a, 213b, 214 of the button 210. The vibration that appears on the button 210 may have a pattern that vibrates uniformly over the entirety of the button 210, as shown in FIG. 23.

The first force sensor 231 and the second force sensor 232 may be disposed on the lower side of the first support plate 280. The first protrusion 213a of the button 210 presses the first support plate 280 when the button 210 is pressed. The first force sensor 231 is pressed by the pressed first support plate 280, and may detect the pressure applied to the button 210. The second protrusion 213b of the button 210 presses the first support plate 280 when the button 210 is pressed. The second force sensor 232 is pressed by the pressed first support plate 280, and may detect the pressure applied to the button 210.

FIGS. 24, 25, 26, 27, and 28 are views illustrating a vibration pattern of a button when haptic feedback button modules include a single supporter according to various embodiments of the disclosure.

Referring to FIG. 24, the haptic feedback button module 200-3 may include one supporter 410 disposed on the upper surface of the lower portion 196b of the housing. The supporter 410 may support the lower surface of the second support plate 250. The second support plate 250 is configured such that the area not supported by the supporter 410 is spaced apart from the upper surface of the lower portion 196b of the housing by a certain distance (e.g., a distance corresponding to the thickness of the supporter 410). The supporter 410 may be disposed at a location corresponding to approximately the center of the vibration actuator 260. In this case, the length of the supporter 410 may be smaller than the length of the vibration actuator 260.

The supporter 410 may be made of a material having the same or similar rigidity as the housing. For example, the supporter 410 may be made of a metal material or a synthetic resin (e.g., engineering plastic).

Referring to FIG. 25, when the center (CP) of the vibration actuator 260 is supported by the supporter 410, the both sides of the vibration actuator 260 that are not supported by the supporter 410 vibrate with a greater amount of vibration than the center (CP) of the vibration actuator 260. By applying the supporter 410, the haptic feedback button module 200-3 may implement a different vibration pattern from the haptic feedback button modules 200, 200-1, and 200-2 where the supporter 410 is not applied.

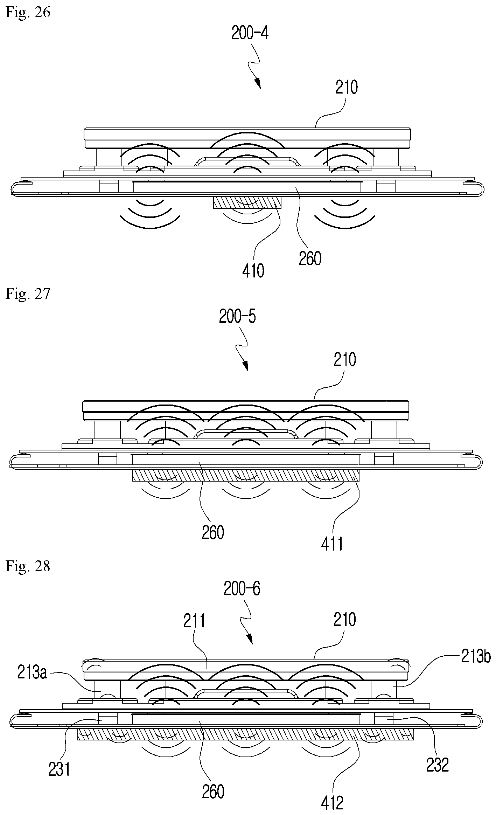

Referring to FIG. 26, the vibration actuator 260 vibrates according to the power pattern transmitted from the haptic driver IC (133 in FIG. 1). The vibration generated at the center of the vibration actuator 260 may be greater than the vibration intensity generated on both sides of the vibration actuator 260 since it is reflected by the supporter 410 and reflected toward the button 210. The vibration pattern that appears on the button 210 may be a pattern in which the center of the button 210 vibrates more than the left and right sides of the button 210.

As such, when the supporter 410 supports the center of the vibration actuator 260, it is possible to induce a greater vibration to appear at the center of the vibration actuator 260 than on both sides of the vibration actuator 260. Such configuration may be applied to maintain the vibration intensity applied to the entire button 210 evenly when the vibration intensity at the center of the button 210 is weak and the user does not feel the vibration, or when the vibration intensity at both ends of the vibration actuator 260 is too strong and the user feels discomfort, depending on the mechanical design structure of the haptic feedback button module 200-4.

Referring to FIG. 27, the length of a supporter 411 may be substantially the same as the length of the vibration actuator 260. The supporter 411 may be disposed to correspond to the vibration actuator 260.

The vibration actuator 260 vibrates according to the power pattern transmitted from the haptic driver IC (133 in FIG. 1). In this case, the vibration generated at the center of the vibration actuator 260 may be reflected by the supporter 411 and transmitted approximately uniformly over the entirety of the button 210 except for the area corresponding to both of the extreme ends of the button 210. The vibration pattern that appears on the button 210 may be a pattern in which the center, left, and right sides of the button 210 vibrate with approximately uniform vibration intensity and both of the extreme ends of the button 210 vibrate with somewhat smaller vibration intensity.

Referring to FIG. 28, the length of the supporter 412 may be greater than the length of the vibration actuator 260. In this case, the supporter 411 may be disposed at a position that supports the vibration actuator 260, the first force sensor 231 and the second force sensor 232.

The vibration actuator 260 vibrates according to the power pattern transmitted from the haptic driver IC (133 in FIG. 1). In this case, the vibration pattern that appears on the button 210 may be a pattern in which the entire area of the button 210 vibrates evenly as the vibration generated by the vibration actuator 260 is transmitted to the pressing portion 211 of the button 210 along the first, second, and third protrusions 213a, 213b, and 214 of the button 210. Such a vibration pattern may allow the user to feel soft vibration.

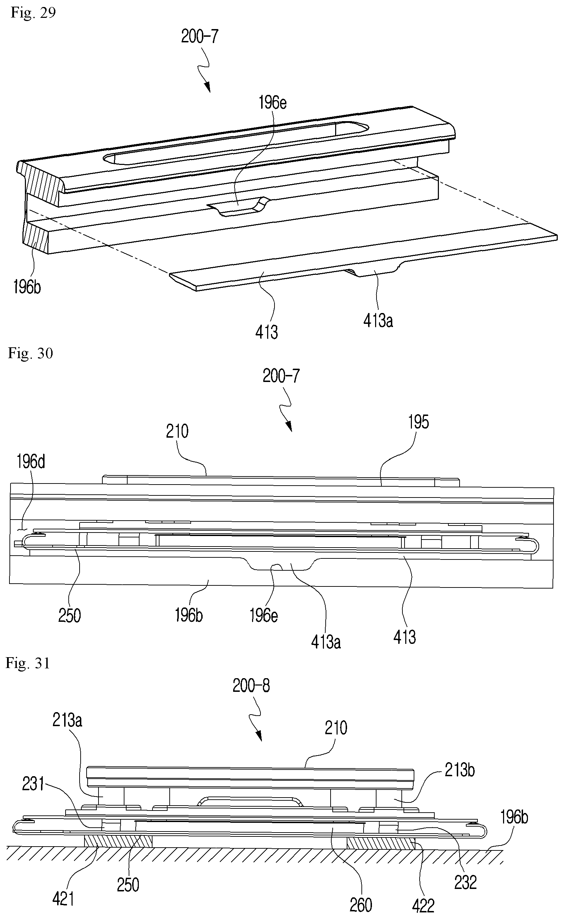

FIG. 29 is a view illustrating a fixing protrusion is provided on a supporter of a haptic feedback button module according to an embodiment of the disclosure. FIG. 30 is a view illustrating a supporter inserted into the receiving space of a housing according to an embodiment of the disclosure.

Referring to FIG. 29, the supporter 413 may be provided with the fixing protrusion 413a on the lower surface of the supporter 413 so as to be stably fixed to the lower portion 196b of the housing. The lower portion 196b of the housing may be provided with a fixing groove 196e on the upper surface of the lower portion 196b of the housing so that the fixing protrusion 413a of the supporter 413 can be inserted.

Referring to FIG. 30, the supporter 413 may stably fix the components that disposed in the receiving space 196d of the housing 195 among the components constituting the haptic feedback button module 200-7 by pushing them toward the button 210.

The fixing protrusion 413a of the supporter 413 may facilitate assembly by serving as a guide when the supporter 413 is inserted into the receiving space 196d of the housing 195. The fixing protrusion 413a of the supporter 413 may be located approximately at the center of the vibration actuator 260. In this case, the thickness of the center of the supporter 413 is greater than the thicknesses of both sides of the supporter 413. Accordingly, the vibration generated at the center of the vibration actuator 260 may be reflected toward the button 210 by the fixing protrusion 413a of the supporter 413. As such, the fixing protrusion 413a of the supporter 413 may affect a vibration pattern appearing on the button 210 to change. The supporter 413 may tune the vibration of the vibration actuator 260 by changing the material (e.g., metal material, synthetic resin).

FIGS. 31, 32, 33, and 34 are views illustrating a vibration pattern of a button when haptic feedback button modules include a plurality of supporters according to various embodiments of the disclosure.

Referring to FIG. 31, a haptic feedback button module 200-8 may include a first supporter 421 and a second supporter 422 disposed on the upper surface of the lower portion 196b of the housing. The first supporter 421 and the second supporter 422 may support both sides of the lower surface of the second support plate 250 at a distance therefrom. The second support plate 250 may be configured such that the area not supported by the first and second supporters 421, 422 is spaced apart from the upper surface of the lower surface 196b of the housing by a certain distance (e.g., a distance corresponding to the thickness of the first and second supporters 421, 422).

The first supporter 421 may be disposed approximately at a location corresponding to the left end of the vibration actuator 260. In this case, the first supporter 421 may be located on the lower side of the first force sensor 231 that is disposed coaxially with the first protrusion 213a of the button 210. The second supporter 422 may be disposed approximately at a location corresponding to the right end of the vibration actuator 260. In this case, the second supporter 422 may be located on the lower side of the second force sensor 232 that is disposed coaxially with the second protrusion 213b of the button 210.

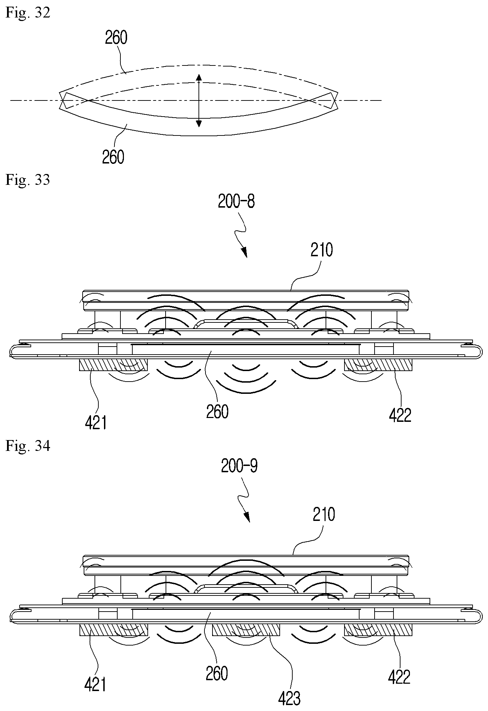

Referring to FIG. 32, when both ends of the vibration actuator 260 are supported by the first and second supporters 421, 422, respectively, the center of the vibration actuator 260 that is not supported by the first and second supporters 421, 422 vibrates with a greater amount of vibration than both ends of the vibration actuator 260. Accordingly, the haptic feedback button module 200-8 may implement a different vibration pattern from the haptic feedback button module (200-3 in FIG. 22) to which one supporter (410 in FIG. 22) is applied.

Referring to FIG. 33, the vibration actuator 260 vibrates according to the power pattern transmitted from the haptic driver IC (133 in FIG. 1). The vibration generated at both ends of the vibration actuator 260 are reflected by the first and second supporters 421, 422 toward both sides of the button 210, and thus may be greater than the intensity of the vibration generated at the center of the vibration actuator 260. The vibration pattern appearing on the button 210 may be a pattern in which both sides of the button 210 vibrate more than the center of the button 210. In this case, the haptic feedback button module 200-8 may implement a vibration pattern that induces stronger vibration at both ends of the button 210 and relatively weaker, softer vibration at the center of the button 210.

Referring to FIG. 34, the haptic feedback button module 200-8 may include the first supporter 421, the second supporter 422, and a third supporter 423. The haptic feedback button module 200-8 is configured mostly similarly to the haptic feedback button module 200-7 illustrated in FIG. 33, and differs in that it further includes the third supporter 423. The third supporter 423 may support both sides of the lower surface of the second support plate 250. The third supporter 423 may be located to correspond to the center of the vibration actuator 260.

The vibration actuator 260 vibrates according to the power pattern transmitted from the haptic driver IC (133 in FIG. 1). The vibration generated at both ends of the vibration actuator 260 may be reflected toward both sides of the button 210 by the first and second supporters 421, 422 and reflected to the center of the button 210 by the third supporter 423. The vibration pattern appearing on the button 210 may be such that the intensity of the vibration appearing at the center of the button 210 is somewhat greater than the intensity of the vibration appearing on both sides of the button 210. In this case, the haptic feedback button module 200-9 may implement soft vibration for the entire area of the button 210 by distributing vibration to the center and both ends of the button 210.

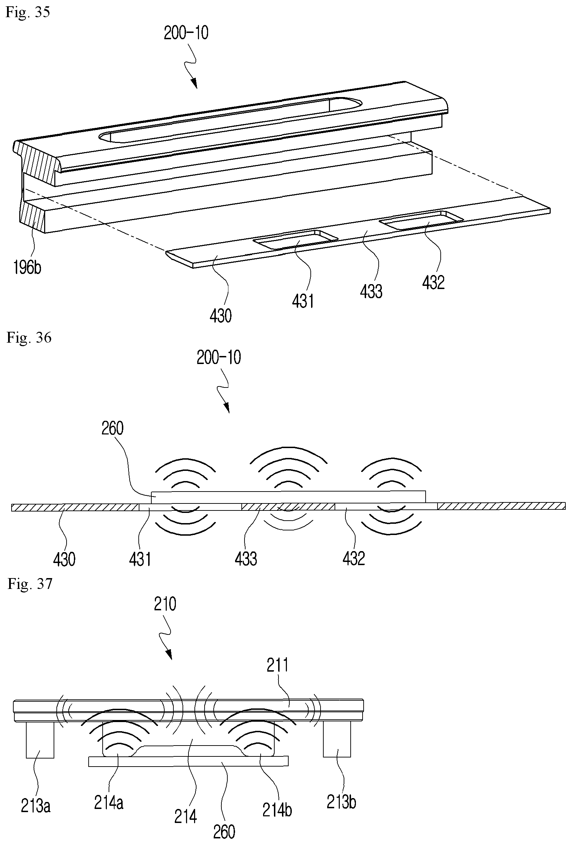

FIG. 35 is a view illustrating a plurality of holes provided in a supporter of a haptic feedback button module according to an embodiment of the disclosure. FIG. 36 is a view illustrating a state in which a vibration actuator mounted on supporter of a haptic feedback button module according to an embodiment of the disclosure.

Referring to FIG. 35, the haptic feedback button module 200-10 may include one supporter 430. The supporter 430 may be provided with a first hole 431 and a second hole 432, and the length of the supporter 430 may be substantially the same as the length of the supporter 413 shown in FIG. 30. Accordingly, the supporter 430 may support substantially the entire area of the second support plate (250 in FIG. 30).

Referring to FIG. 36, the supporter 430 may have the vibration actuator 260 disposed on the upper surface of the supporter 430. In this case, the first hole 431 and the second hole 432 of the supporter 430 may each correspond to both sides of the vibration actuator 260, and a center 433 of the supporter 430 located between the first hole 431 and the second hole 432 of the supporter 430 may correspond to the center of the vibration actuator 260.

The vibration actuator 260 vibrates according to the power pattern transmitted from the haptic driver IC (133 in FIG. 1). In this case, the center 433 of the supporter 430 reflects vibration generated at the center of the vibration actuator 60 toward the button (210 in FIG. 30). The vibration generated at both sides of the vibration actuator 260 are not interfered with by the supporter 430, so soft vibration with weaker vibration intensity compared to the center of the supporter 430 may be transmitted toward the button (210 in FIG. 30).

According to an embodiment of the disclosure, the haptic feedback button module may have different vibration patterns implemented on the button depending on the shape of the button (e.g., the shape of the third protrusion of the button). Hereinafter, vibration patterns according to various shapes of the button will be described with reference to the drawings.

FIGS. 37, 38, 39, 40, 41, and 42 are views illustrating a vibration pattern of a button according to a shape of buttons of a haptic feedback button module according to various embodiments of the disclosure.

Referring to FIG. 37, the button 210 may have the first protrusion 213a and the second protrusion 213b provided on the left and right sides of the lower surface of the pressing portion 211, and the third protrusion 214 provided at the center of the lower surface of the pressing portion 211. The third protrusion 214 of the button 210 may have the first extension 214a and the second extension 214b protruding toward the left and right sides of the lower surface, respectively.

The vibration actuator 260 may be located on the lower surface of the third protrusion 214 of the button 210. In this case, the first extension 214a and the second extension 214b may be in contact with or adjacent to the upper surface of the vibration actuator 260.

The vibration generated by the vibration actuator 260 may be transmitted to the pressing portion 211 of the button 210 along the first extension 214a and the second extension 214b of the third protrusion 214 of the button 210. When the vibration actuator 260 vibrates, the vibration pattern of the button 210 may be a pattern in which the vibration intensity that appears on the left and right sides of the button 210 is greater than the vibration intensity that appears at the center and both ends of the button 210.

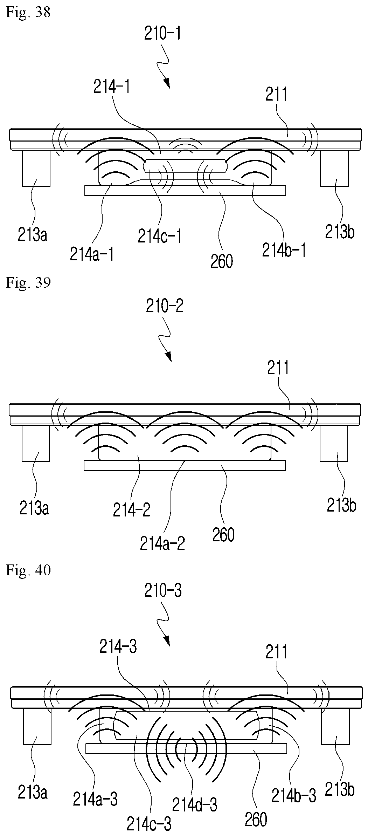

Referring to FIG. 38, the button 210-1 is mostly similar to the shape of the button 210 shown in FIG. 37, and differs in that a through-hole 241c-1 is provided in a third protrusion 214-1. The third protrusion 214-1 of the button 210-1 may have a first extension 214a-1 and a second extension 214b-1 protruding toward the left and right sides, respectively.

The vibration generated by the vibration actuator 260 may be transmitted to the pressing portion 211 of the button 210-1 along the first extension 214a-1 and the second extension 214b-1 of the third protrusion 214-1 of the button 210-1. In this case, the vibration transmitted to the center of the button 210-1 may be significantly attenuated by the through-hole 214c-1. Accordingly, the button 210-1 may implement a different vibration pattern from the button 210 shown in FIG. 37.

Referring to FIG. 39, a third protrusion 214-2 of the button 210-2 may be configured to have a flat lower surface 214a-2. Accordingly, the lower surface 214a-2 of the third protrusion 214-2 may uniformly transmit the vibration transmitted from the vibration actuator 260 to the entire area of the pressing portion 211 of the button 210-2.

Referring to FIG. 40, the third protrusion 214-3 of the button 210-3 is mostly similar to the shape of the button 210-2 shown in FIG. 39 and differs in that it includes a through-hole 241c-3. The through-hole 241c-3 in the third protrusion 214-3 may have a size greater than the size of the through-hole 214c-1 provided in the third protrusion 214-1 of the button 210-1 shown in FIG. 38.

The vibration generated by the vibration actuator 260 may be transmitted to the pressing portion 211 of the button 210-3 along both sides 214a-3, 214b-3 and the lower surface 214d-3 of the third protrusion 214-3 of the button 210-3. In this case, the vibration transmitted to the center of the button 210-3 may be attenuated by the through-hole 214c-3. The amount of vibration attenuated by the through-hole 214c-3 may be greater than the amount of vibration attenuated by the through-hole 214c-1 shown in FIG. 38. As such, the vibration pattern appearing on the buttons 210-1, 210-3 may be tuned by adjusting the size of the through-holes 214c-1, 214c-3.

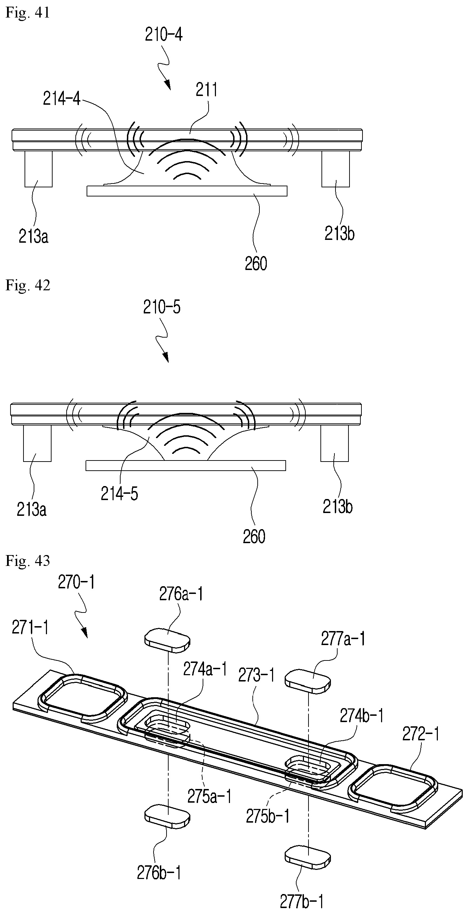

Referring to FIG. 41, a third protrusion 214-4 of the button 210-4 may be configured to gradually decrease in width from the lower side toward the pressing portion 211. In this case, a pattern in which the vibration generated by the vibration actuator 260 is transmitted to the lower surface of the third protrusion 214-4 of the button 210-4 and concentered in the center of the button 210-4 may appear.

Referring to FIG. 42, a third protrusion 214-5 of the button 210-5 may be configured to gradually increase in width from the lower side toward the pressing portion 211. In this case, a pattern in which the vibration generated by the vibration actuator 260 is transmitted to the lower surface of the third protrusion 214-5 of the button 210-4 and transmitted from the center of the button 210-5 toward both sides of the button 210-5 may appear.

The waterproof member (270 in FIG. 7) may be made of an elastic material such that it is in close contact with the lower surface (196a-1 in FIG. 7) of the upper portion of the housing in a watertight manner. In this case, the waterproof member 270 may absorb some of the vibration generated by the vibration actuator (260 in FIG. 7) due to the elasticity of the waterproof member. In this case, the amount of vibration transmitted to the button (210 in FIG. 7) may be somewhat reduced. Hereinafter, a structure capable of improving the reduction of the amount of vibration transmitted to the waterproof member will be described with reference to the drawings.

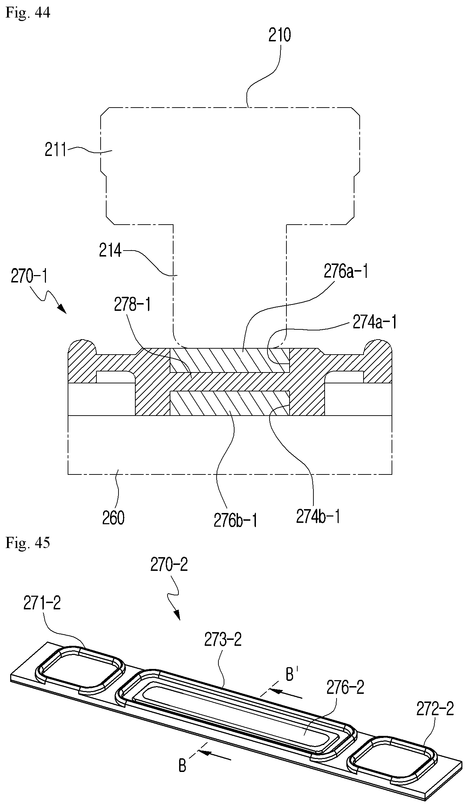

FIG. 43 is an exploded view illustrating a vibration transmission member coupled to a waterproof member according to an embodiment of the disclosure. FIG. 44 is a cross-sectional view illustrating a vibration transmission member coupled to a waterproof member according to an embodiment of the disclosure.

Referring to FIGS. 43 and 44, the waterproof member 270-1 may have a plurality of vibration transmission members 276a-1, 276b-1, 277a-1, 277b-1 disposed at a location where the third protrusion 214 of the button 210 comes into contact. The plurality of vibration transmission members 276a-1, 276b-1, 277a-1, 277b-1 may be made of a material having rigidity suitable for vibration transmission (e.g., metal material, engineering plastic).

The waterproof member 270-1 may be provided with first and second fixing grooves 274a-1, 274b-1 on the upper surface of the waterproof member and third and fourth fixing grooves 275a-1, 275b-1 on the lower surface so that the plurality of vibration transmission members 276a-1, 276b-1, 277a-1, 277b-1 can be fixed thereto. The first and second fixing grooves 274a-1 and 275a-1 and the second and fourth fixing grooves 274b-1 and 275a-1 may be spaced apart by a partition 278-1.

The vibration generated by the vibration actuator 260 may be transmitted to the first and second extensions (214a, 214b in FIG. 5) provided on the third protrusion 214 of the button 210 through the plurality of vibration transmission members 276a-1, 276b-1, 277a-1, 277b-1 and then to the pressing portion 211 of the button 210. In this case, the amount of vibration transmitted to the button 210 by the plurality of vibration transmission members 276a-1, 276b-1, 277a-1, 277b-1 may be increased, and the amount of vibration absorbed by the waterproof member 270-1 may be improved or minimized.

In FIG. 43, unexplained reference numeral 271-1 is a first rib, 272-1 is a second rib, and 273-1 is a third rib.

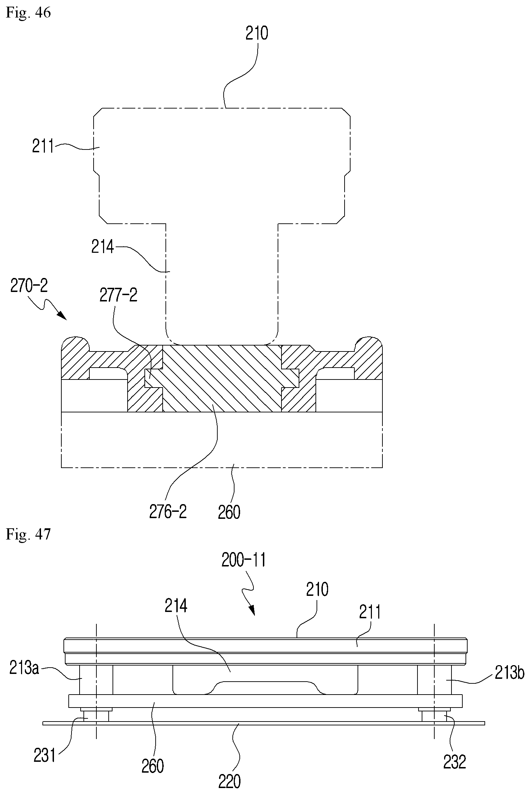

FIG. 45 is an assembly view illustrating a vibration transmission member coupled to a waterproof member according to an embodiment of the disclosure. FIG. 46 is a cross-sectional view illustrating a waterproof member along line B-B' of FIG. 45 according to an embodiment of the disclosure.

Referring to FIG. 45, the waterproof member 270-2 may have one vibration transmission member 276-2 disposed at a location where the third protrusion 214 of the button 210 comes into contact. The vibration transmission member 276-2 may be made of a material having rigidity suitable for vibration transmission (e.g., metal material, engineering plastic).

Referring to FIG. 46, the vibration transmission member 276-2 may have a snagging protrusion 277-2 formed along the side. The vibration transmission member 276-2 may be coupled to the inside of the waterproof member 270-2 through insert molding. In this case, the vibration transmission member 276-2 may not be easily separated from the waterproof member 270-2 through the snagging protrusion 277-2.

The vibration generated by the vibration actuator 260 may be sequentially transmitted to the third protrusion 214 and the pressing portion 211 of the button 210 through the vibration transmission member 276-2. In this case, the amount of vibration transmitted to the button 210 by the vibration transmission member 276-2 may be increased, and the amount of vibration absorbed by the waterproof member 270-2 may be improved or minimized.

Referring to FIG. 45, unexplained reference numeral 271-2 is a first rib, 272-2 is a second rib, and 273-2 is a third rib.

The haptic feedback button module 200 is not limited to an embodiment in which the first force sensor 231, the second force sensor 232, and the vibration actuator 260 are disposed on the same side of the flexible printed circuit board 220. Hereinafter, various arrangements of the first force sensor 231, the second force sensor 232, and the vibration actuator 260 will be described below with reference to the drawings.

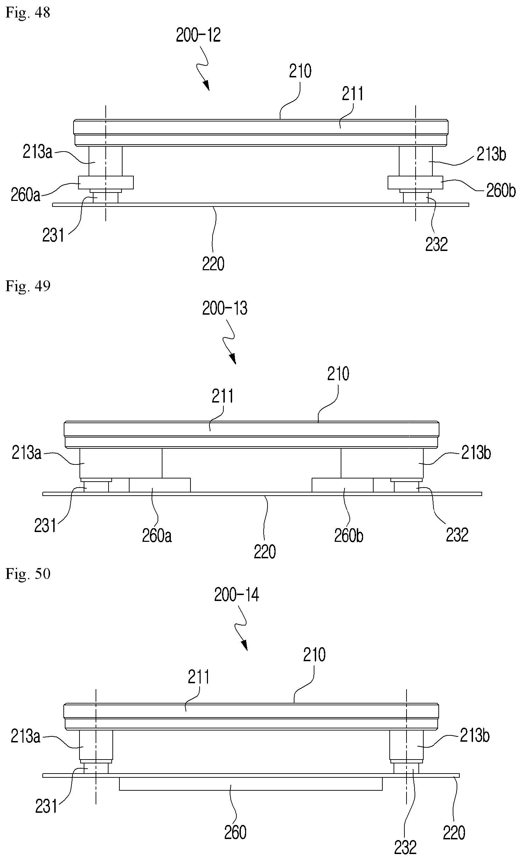

FIGS. 47 and 48 are views illustrating a vibration actuator of haptic feedback button modules and first and second force sensors are stacked according to various embodiments of the disclosure.

Referring to FIG. 47, the haptic feedback button module 200-11 may be configured such that the first force sensor 231 and the second force sensor 232 may be disposed on a upper surface of the flexible printed circuit board 220. In this case, the first force sensor 231 may be located coaxially with the first protrusion 213a of the button 210, and the second force sensor 232 may be located coaxially with the second protrusion 213b of the button 210. The length of the vibration actuator 260 may correspond approximately to the length of the button 210. The vibration actuator 260 may be located between the button 210 and the first and second force sensors 231, 232. In this case, one side of the lower surface of the vibration actuator 260 may be disposed on the upper surface of the first force sensor 231 and the other side of the lower surface of the vibration actuator 260 may be disposed on the upper surface of the second force sensor 232.

When the button 210 is pressed, the first and second protrusions 213a, 213b of the button 210 may press the first and second force sensors 231, 232 through the vibration actuator 260. The vibration generated by the vibration actuator 260 may be transmitted to the pressing portion 211 of the button 210 through the first, second, and third protrusions 213a, 213b, 214 of the button 210 in contact with the upper surface of the vibration actuator 260.

Referring to FIG. 48, the haptic feedback button module 200-12 is mostly similar to the configuration of the haptic feedback button module 200-12 shown in FIG. 47. The haptic feedback button module 200-12 may include a first vibration actuator 260a and a second vibration actuator 260b. The first vibration actuator 260a may be located between the first protrusion 213a of the button 210 and the first force sensor 231. The second vibration actuator 260b may be located between the second protrusion 213b of the button 210 and the second force sensor 232.

In this case, the button 210 may receive vibration generated by each of the first vibration actuator 260a and the second vibration actuator 260b to the left and right sides of the button 210.

FIG. 49 is a view illustrating a vibration actuator of a haptic feedback button module and first and second force sensors together in contact with first and second protrusions according to an embodiment of the disclosure.

Referring to FIG. 49, the haptic feedback button module 200-13 may include the first force sensor 231, the second force sensor 232, the first vibration actuator 260a, and the second vibration actuator 260b disposed on the upper surface of the flexible printed circuit board 220. In this case, the first force sensor 231 and the first vibration actuator 260a may be located on the lower side of the first protrusion 213a of the button 210. The second force sensor 232 and the second vibration actuator 260b may be located on the lower side of the second protrusion 213b of the button 210.

When the button 210 is pressed, the first protrusion 213a of the button 210 may press the first force sensor 231, and the second protrusion 213b may press the second force sensor 232. The vibration generated by the first vibration actuator 260a may be transmitted to the pressing portion 211 of the button 210 through the first protrusion 213a. The vibration generated by the second vibration actuator 260b may be transmitted to the pressing portion 211 of the button 210 through the second protrusion 213b.

FIGS. 50, 51, and 52 are views illustrating a vibration actuator of haptic feedback button modules and first and second force sensors disposed on different sides of a flexible printed circuit board according to various embodiments of the disclosure.

Referring to FIG. 50, the haptic feedback button module 200-14 may include the first force sensor 231, the second force sensor 232, and the vibration actuator 260 disposed on the flexible printed circuit board 220. The first force sensor 231 may be located coaxially with the first protrusion 213a of the button 210, and the second force sensor 232 may be located coaxially with the second protrusion 213b of the button 210. The first force sensor 231 and the second force sensor 232 may be disposed on the upper surface of the flexible printed circuit board 220. The vibration actuator 260 may be disposed on the lower surface of the flexible printed circuit board 220. The vibration actuator 260 may have a length such that both ends are adjacent to the first force sensor 231 and the second force sensor 232, respectively.

When the button 210 is pressed, the first protrusion 213a of the button 210 may press the first force sensor 231, and the second protrusion 213b may directly press the second force sensor 232. The vibration generated by the vibration actuator 260 may be transmitted in the first and second directions. The vibration transmission path in the first direction leads to the pressing portion of the button 210 through the flexible printed circuit board 220, the first force sensor 231, and the first protrusion 213a of the button 210. The vibration transmission path in the second direction leads to the pressing portion 211 of the button 210 through the flexible printed circuit board 220, the second force sensor 232, and the second protrusion 213b of the button 210.

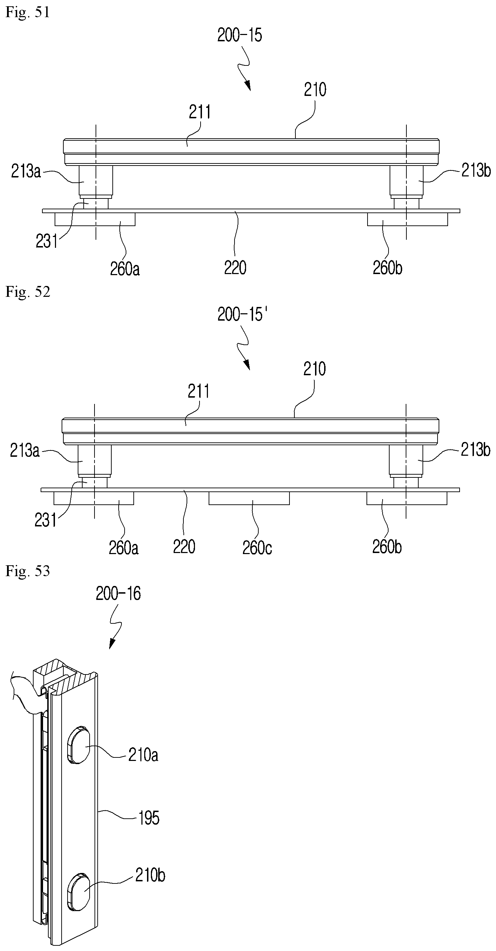

Referring to FIG. 51, the haptic feedback button module 200-15 is mostly the same as the configuration of the haptic feedback button module 200-14 shown in FIG. 50, and differs in that it has two vibration actuators 260a, 260b. The first vibration actuator 260a may be disposed at a location corresponding to the first force sensor 231. For example, the center of the first vibration actuator 260a may be disposed at a location corresponding to the center of the first force sensor 231. The second vibration actuator 260b may be disposed at a location corresponding to the second force sensor 232. For example, the center of the second vibration actuator 260b may be disposed at a location corresponding to the center of the second force sensor 232.

When the button 210 is pressed, the first protrusion 213a of the button 210 may press the first force sensor 231, and the second protrusion 213b may directly press the second force sensor 232. The vibration generated by the first vibration actuator 260a is transmitted to the pressing portion 211 of the button 210 through a vibration transmission path in the first direction. The vibration generated by the second vibration actuator 260b is transmitted to the pressing portion 211 of the button 210 through a vibration transmission path in the second direction.

Referring to FIG. 52, a haptic feedback button module 200-15' is mostly the same as the configuration of the haptic feedback button module 200-15 shown in FIG. 51, and differs in that it has three vibration actuators 260a, 260b, 260c. The third vibration actuator 260c may be disposed on the lower surface of the flexible printed circuit board 220 together with the first and second vibration actuators 260a, 260b. The third vibration actuator 260c may be disposed between the first and second vibration actuators 260a, 260b. In this case, the spacing between the first vibration actuator 260a and the third vibration actuator 260c may be substantially the same as the spacing between the second vibration actuator 260b and the third vibration actuator 260c.

When the button 210 is pressed, the first protrusion 213a of the button 210 may press the first force sensor 231, and the second protrusion 213b may directly press the second force sensor 232. The vibration generated by the first vibration actuator 260a is transmitted to the pressing portion 211 of the button 210 through a vibration transmission path in the first direction. The vibration generated by the second vibration actuator 260b is transmitted to the pressing portion 211 of the button 210 through a vibration transmission path in the second direction. The vibration generated by the third vibration actuator 260c is transmitted to the first and second vibration actuators 260a, 260b through vibration transmission paths in the first and second directions, respectively. Accordingly, the pressing portion 211 of the button 210 may receive strong vibration transmitted by the first, second, and third vibration actuators 260a, 260b, 260c.

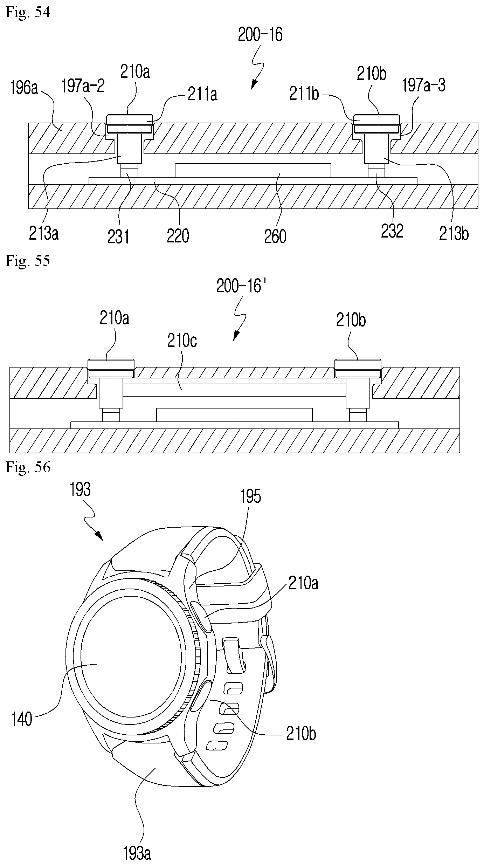

FIG. 53 is a view illustrating a haptic feedback button module according to an embodiment of the disclosure. FIG. 54 is a cross-sectional view illustrating a haptic feedback button module according to an embodiment of the disclosure. FIG. 55 is a cross-sectional view illustrating a haptic feedback button module according to an embodiment of the disclosure.

Referring to FIGS. 53 and 54, the haptic feedback button module 200-16 are mostly similar to the configuration of the haptic feedback button module 200 shown in FIG. 3, and differs in that it includes a plurality of buttons 210a, 210b. Accordingly, a first coupling hole 197a-2 and a second coupling hole 197a-3 may be provided on the upper portion 196a of the housing 195 for coupling the first and second buttons 210a, 210b, respectively.

The vibration generated by the vibration actuator 260 leads to pressing portions 211a, 211b of the first and second buttons 210a, 210b through vibration transmission paths in the first and second directions, respectively. The vibration path in the first direction leads to the pressing portion 211a of the first button 210a through the flexible printed circuit board 220, the first force sensor 231, and the protrusion 213a of the first button 210a. The vibration transmission path in the second direction leads to the pressing portion 211b of the second button 210b through the flexible printed circuit board 220, the second force sensor 232, and the protrusion 213b of the second button 210b.

Referring to FIG. 55, a haptic feedback button module 200-16' is mostly similar to the configuration of the haptic feedback button module 200-16 shown in FIG. 53, and differs in that the first and second buttons 210a, 210b are integrally formed by a connecting bar 210c.

FIG. 56 is a view illustrating a smartwatch as an electronic device according to an embodiment of the disclosure.

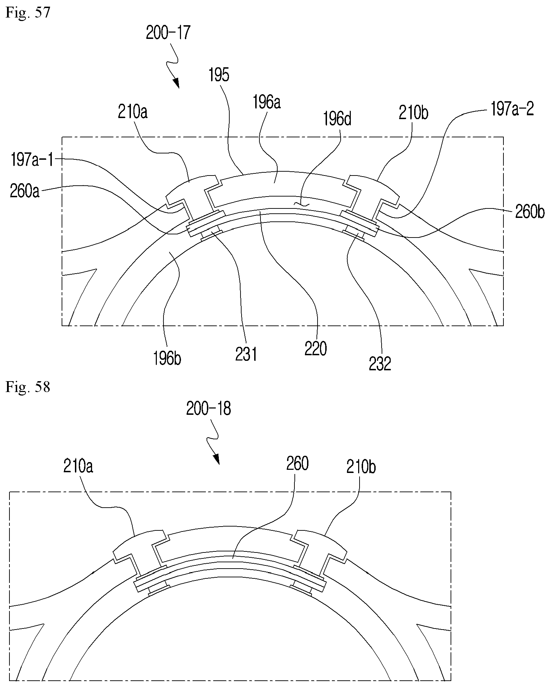

FIGS. 57 and 58 are views illustrating haptic feedback button modules applied to the smartwatch 193 according to various embodiments of the disclosure.

Referring to FIGS. 56 and 57, the smartwatch 193 may include the housing 195, the display 140 that may be disposed on the front of the housing 195, and the haptic feedback button module 200-17 provided on one side of the housing 195.

The haptic feedback button module 200-17 may include the first button 210a and the second button 210b coupled to the first coupling hole 197a-2 and the second coupling hole 197a-3 provided on the outer portion 196a of the housing 195, the flexible printed circuit board 220, the first force sensor 231, the second force sensor 232, the first vibration actuator 260a, and the second vibration actuator 260b.

The flexible printed circuit board 220 may have the first vibration actuator 260a and the second vibration actuator 260b spaced apart on its upper surface. The first vibration actuator 260a may be disposed coaxially with the first button 210a, and may contact a lower end of the first button 210a. The second vibration actuator 260b may be disposed coaxially with the second button 210b, and may contact a bottom of the second button 210b.

The first force sensor 231 and the second force sensor 232 may be spaced apart on the rear surface of the flexible printed circuit board 220. The first force sensor 231 and the second force sensor 232 may be supported on the inner portion 196b of the housing 195.

With the exception of the first and second buttons 210a, 210b, the remaining components of the haptic feedback button module 200-17 may be located in the receiving space 196d of the housing 195.

The first force sensor 231 may be disposed coaxially with the first button 210a and the first vibration actuator 260a so as to detect the pressure of pressing the first button 210a. The second force sensor 232 may be coaxially disposed with the second button 210b and the second vibration actuator 260b so as to detect the pressure of pressing the second button 210b.

When the first button 210a is pressed, the first force sensor 231 may obtain the pressing motion of the first button 210a. The first vibration actuator 260a may transmit a vibration pattern based on the pressing motion of the first button 210a to the first button 210a within the shortest time (e.g., within several tens of ms). Similarly, when the second button 210b is pressed, the second force sensor 232 may obtain the pressing motion of the second button 210b. The second vibration actuator 260b may transmit a vibration pattern based on the pressing motion of the second button 210b to the second button 201b within the shortest time (e.g., within several tens of ms).

Referring to FIG. 58, the haptic feedback button module 200-18 is mostly similar to the configuration of the haptic feedback button module 200-17 shown in FIG. 56, and differs in that it is configured with one vibration actuator 260. The vibration actuator 260 may be in contact with the bottom of the first button 210a and the bottom of the second button 210b. Accordingly, the first button 210a and the second button 210b may implement haptic feedback by vibration generated by the single vibration actuator 260.

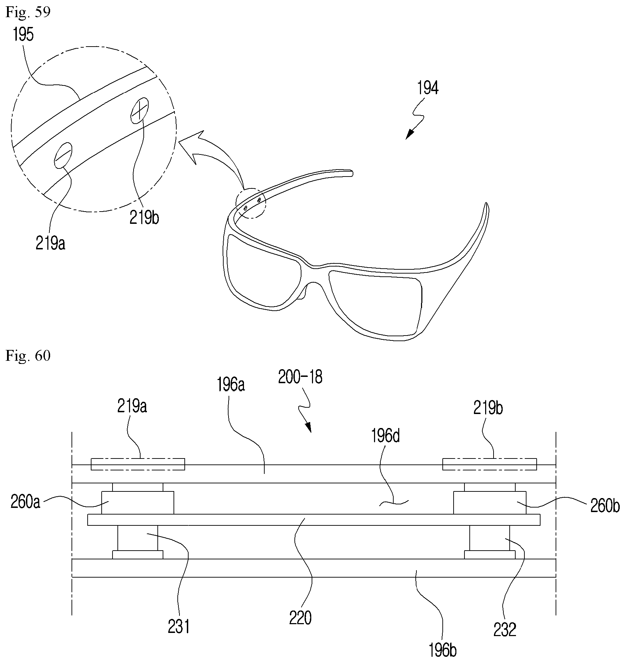

FIG. 59 is a view illustrating augmented reality glasses as the electronic device according to an embodiment of the disclosure. FIG. 60 is a view illustrating a haptic feedback button module applied to the augmented reality glasses according to an embodiment of the disclosure.

Referring to FIGS. 59 and 60, the augmented reality glasses 194 may include the housing 195, the display 140 that may be disposed on the front of the housing 195, and the haptic feedback button module 200-19 provided on one side of the housing 195. The housing 195 may form the appearance of an eyeglass leg.

The haptic feedback button module 200-19 may include a first imprint portion 219a and a second imprint portion 219b, the flexible printed circuit board 220, the first force sensor 231, the second force sensor 232, the first vibration actuator 260a, and the second vibration actuator 260b.

The first imprint portion 219a and the second imprint portion 219b may be formed as a negative or positive engraving on the surface of the outer portion 196a of the housing 195 so that the user can recognize them. The housing 195 may have rigidity for durability and may be made of a material having elasticity so that the first imprint portion 219a and the second imprint portion 219b may be pressed by the user. Since the housing 195 is made of an elastic material, the first imprint portion 219a and the second imprint portion 219b may vibrate by vibration generated by the first and second vibration actuators 260a, 260b. The user may recognize haptic feedback from the first imprint portion 219a and the second imprint portion 219b through his or her fingers.

The flexible printed circuit board 220 may have the first vibration actuator 260a and the second vibration actuator 260b spaced apart on its upper surface. The first vibration actuator 260a may be disposed coaxially with the first imprint portion 219a, and may contact a lower end of the first imprint portion 219a. The second vibration actuator 260b may be coaxially disposed with the second imprint portion 219b and may be in contact with a lower end of the second imprint portion 219b.

The first force sensor 231 and the second force sensor 232 may be spaced apart on the rear surface of the flexible printed circuit board 220. The first force sensor 231 and the second force sensor 232 may be supported on the inner portion 196b of the housing 195.

With the exception of the first and second imprint portions 219a, 219b, the remaining configurations of the haptic feedback button modules 200-19 may be located in the receiving space 196d of the housing 195.

The first force sensor 231 may be disposed coaxially with the first imprint portion 219a and the first vibration actuator 260a so as to detect the pressure of pressing the first imprint portion 219a. The second force sensor 232 may be disposed coaxially with the second imprint portion 219b and the second vibration actuator 260b so as to detect the pressure of pressing the second imprint portion 219b.

When the first imprint portion 219a is pressed, the first force sensor 231 may obtain the pressing motion of the first imprint portion 219a. The first vibration actuator 260a may transmit a vibration pattern based on the pressing motion of the first imprint portion 219a to the first imprint portion 219a within the shortest time (e.g., within several tens of ms). Similarly, when the second imprint portion 219b is pressed, the second force sensor 232 may obtain the pressing motion of the second imprint portion 219b. The second vibration actuator 260b may transmit a vibration pattern based on the pressing motion of the second imprint portion 219b to the second imprint portion 219b within the shortest time (e.g., within several tens of ms).

According to an embodiment of the disclosure, the electronic device 100 may include the housing 195, the button 210 provided on a side of the housing, and the flexible printed circuit board (FPCB) 220 disposed below the button. The FPCB may include the first sensor 231 and the second sensor 232 mounted on a first side of the FPCB. The first sensor may be configured to detect a first pressure input applied through a first pressing portion of the button and output a first signal corresponding to the first pressure input. The second sensor may be configured to detect a second pressure input applied through a second pressing portion of the button and output a second signal corresponding to the second pressure input. The FPCB may be electrically connected to the first sensor and the second sensor. The electronic device 100 may include the vibration actuator 135 mounted on the first side of the FPCB between the first sensor and the second sensor, the vibration driver IC 133 for driving the vibration actuator, the memory 120 including instructions, and the at least one processor 110 including processing circuitry. The instructions, when executed by the at least one processor, may cause the electronic device to identify a type of button input received through the button based on information received through at least one of the first sensor or the second sensor, and cause the vibration actuator to generate a vibration pattern based on the button input type.

According to an embodiment of the disclosure, the type of button input received through the button 210 may be any one of: a single press for a predetermined period of time, two or more consecutive presses for a predetermined period of time, a press in a half-shutter motion for a predetermined period of time, and a swipe.

According to an embodiment of the disclosure, the type of button input received through the button 210 may be any one of: one press for a second time period shorter than a first time period, two or more consecutive presses for the second time period, one press for a third time period longer than the first time period, two or more presses for the third time period, and two or more presses with different pressures for a predetermined period of time.

According to an embodiment of the disclosure, the button 210 may include the first protrusion 213a provided on the first side of the lower surface of the button and disposed at a location corresponding to the first sensor 231 to correspond to the first pressing portion, and the second protrusion 213b provided on the second side of the lower surface of the button and disposed at a location corresponding to the second sensor 232 to correspond to the second pressing portion.

According to an embodiment of the disclosure, the first sensor 231 may include the first force sensor 231. The second sensor 232 may include the second force sensor 232 spaced apart from the first force sensor.

According to an embodiment of the disclosure, the button 210 may include the third protrusion 214 disposed between the first protrusion and the second protrusion on the lower surface of the button and configured to transmit vibration generated by the vibration actuator to the upper surface of the button.

According to an embodiment of the disclosure, the first force sensor 231, the second force sensor 232, and the vibration actuator 260 may be disposed side by side on the first side of the FPCB 220.

According to an embodiment of the disclosure, the vibration actuator may include the first vibration actuator 260a adjacent to the first force sensor 231 and at least partially overlapped by the first protrusion 213a, and the second vibration actuator 260b adjacent to the second force sensor 232 and at least partially overlapped by the second protrusion 213b.

According to an embodiment of the disclosure, the first force sensor 231 and the second force sensor 232 may be disposed on the first side of the FPCB 220. The vibration actuator 260 may be disposed on the second side that is opposite to the first side of the FPCB 220.

According to an embodiment of the disclosure, the vibration actuator may include the first vibration actuator 260a overlapped by the first force sensor 231 and the second vibration actuator 260b overlapped by the second force sensor 232.

According to an embodiment of the disclosure, the vibration actuator may include the first vibration actuator 260a overlapping the first force sensor 231 and the second vibration actuator 260b overlapping the second force sensor 232.

According to an embodiment of the disclosure, the vibration actuator may include the third vibration actuator 260c disposed between the first vibration actuator 260a and the second vibration actuator 260b.

According to an embodiment of the disclosure, the vibration actuator 260 may overlap the first force sensor 231 and the second force sensor 232.

According to an embodiment of the disclosure, the vibration actuator may include a piezo actuator.

According to an embodiment of the disclosure, the third protrusion may include a first extension 241a and a second extension 241b protruding from each end of the third protrusion to transmit vibration generated by the vibration actuator to both ends of the button.

According to an embodiment of the disclosure, the third protrusion may have a cavity 241c-1 formed between a first extension 241a-1 and a second extension 241b-1.

According to an embodiment of the disclosure, the lower surface of the third protrusion may be corresponding to the vibration actuator and a slot 241c-3 may be formed along the longitudinal direction of the third protrusion thereof.

According to an embodiment of the disclosure, the third protrusion 214-4 may be formed such that the cross-sectional area of the third protrusion gradually decreases from the vibration actuator toward the upper surface of the button.

According to an embodiment of the disclosure, the third protrusion 214-5 may be formed such that the cross-sectional area of the third protrusion gradually increases from the vibration actuator toward the upper surface of the button.

According to an embodiment of the disclosure, the electronic device may include supporters 410, 411, 412, 413 disposed between the inner portion 196b of the housing and the flexible printed circuit board 220 and guiding vibration generated by the vibration actuator toward the button.

According to an embodiment of the disclosure, the supporter 410 may be disposed to support a center portion of the lower surface of the vibration actuator.

According to an embodiment of the disclosure, the supporter 412 may be extended such that both ends of the supporter 412 support the first force sensor 231 and the second force sensor 232, respectively.

According to an embodiment of the disclosure, the supporter 411 may have a size corresponding to the size of the vibration actuator 260.

According to an embodiment of the disclosure, the supporters may include the first supporter 421 supporting a first end of the vibration actuator and the first force sensor together, and the second supporter 422 supporting a second end of the vibration actuator and the second force sensor together.

According to an embodiment of the disclosure, the supporters may further include the third supporter 423 supporting the vibration actuator.

According to an embodiment of the disclosure, the supporter 413 may further include the fixing protrusion 413a inserted into the fixing groove 196e provided in the inner portion of the housing.

According to an embodiment of the disclosure, the supporter 430 may be formed with the first hole 431 and the second hole 432 corresponding to each end of the vibration actuator.

According to an embodiment of the disclosure, the button may include the first button 210a corresponding to the first force sensor and the second button 210b corresponding to the second force sensor and spaced apart from the first button.

According to an embodiment of the disclosure, the button may include the coupling members 215a, 215b inserted into the coupling hole 197a provided in the outer portion of the housing, and coupled to the button to prevent the button from being separated from the coupling hole of the housing.

According to an embodiment of the disclosure, the coupling members 215a, 215b may include the first hook 215a-1 disposed adjacent to the first protrusion and the second hook 215a-2 disposed adjacent to the second protrusion. Each of the first hook and the second hook may be hooked at both ends around the coupling hole 197a of the housing.

According to an embodiment of the disclosure, the coupling member 215" may include an elastic member (e.g., a leaf spring) elastically connecting the button to the housing such that the button is movable in inward and outward directions of the housing.

According to an embodiment of the disclosure, the coupling member 215" may be coupled to the third protrusion 214" of the pressing portion of the button, and both ends 215a", 215b" may be hooked to the peripheries 197d-1", 197d-2" around the first through-hole of the housing into which the third protrusion is inserted.

According to an embodiment of the disclosure, the coupling member 215" may include a first coil spring in which both ends are fixed to the first protrusion and to a periphery of the coupling hole of the housing and a second coil spring in which both ends are fixed to the second protrusion and to a periphery of the coupling hole of the housing.

According to an embodiment of the disclosure, the coupling member may include a first snap ring coupled to the first protrusion 213a'" and a second snap ring coupled to the second protrusion 213b‴. The first snap ring may be snapped around a periphery of the second through-hole 197b"' of the housing 195"' into which the first protrusion is inserted. The second snap ring may be snapped around a periphery of the third through-hole 197c"' of the housing 195"' into which the second protrusion is inserted.

According to an embodiment of the disclosure, the electronic device may include the waterproof member 270 disposed between the button and the first force sensor, the second force sensor and the vibration actuator.

According to an embodiment of the disclosure, the first protrusion 213a, the second protrusion 213b and the third protrusion 214 may be inserted into the first through-hole 197a, the second through-hole 197b and the third through-hole 197c disposed in the inner portion of the housing 195, respectively. The waterproof member may include the first rib 271 that is in close contact with the inner surface of the housing and surrounds a periphery of the first through-hole, the second rib 272 that is in close contact with the inner surface of the housing and surrounds a periphery of the second through-hole, and the third rib 273 that is in close contact with the inner surface of the housing and surrounds a periphery of the third through-hole.

According to an embodiment of the disclosure, the waterproof member 270' may include the first seal ring 270a' coupled to the first protrusion and contacting the inner circumferential surface of the first through-hole, the second seal ring 270b' coupled to the second protrusion and contacting the inner circumferential surface of the second through-hole, and the third seal ring 270c' coupled to the third protrusion and contacting the inner circumferential surface of the third through-hole.

According to an embodiment of the disclosure, the electronic device may include the vibration transmission members 276a-1, 276b-1, 277a-1, 277b-1 having hardness higher than the hardness of the waterproof member and coupled to the waterproof member to contact the third protrusion.

According to an embodiment of the disclosure, the vibration transmission members may include the first vibration transmission member 276a-1 and the second vibration transmission member 277a-1 spaced apart from the first vibration transmission member.

According to an embodiment of the disclosure, the electronic device may include the third vibration transmission member 276b-1 disposed on the lower surface of the waterproof member corresponding to the first vibration transmission member 276a-1 and the fourth vibration transmission member 277b-1 disposed on the lower surface of the waterproof member corresponding to the second vibration transmission member 277a-1. Each of the third vibration transmission member 276b-1 and the fourth vibration transmission member 277b-1 may be in contact with the vibration actuator 260.

According to an embodiment of the disclosure, the vibration transmission members may be configured to include a metal plate or a synthetic resin plate.

According to an embodiment of the disclosure, the electronic device may include the first protective member 241 disposed between the first protrusion and the first force sensor and the second protective member 242 disposed between the second protrusion and the second force sensor.

According to an embodiment of the disclosure, the electronic device may include the first spacer 291 and the second spacer 292 which are adjacent to the first force sensor and the second force sensor, respectively, and inserted between the flexible printed circuit board and the waterproof member to press the waterproof member toward an outer side of the housing.

According to an embodiment of the disclosure, the electronic device may include: the housing 195 comprising an outer portion provided with a coupling hole, an inner portion spaced apart from the outer portion, and a receiving space provided between the outer portion and the inner portion, the button 210 movably inserted into the coupling hole on the outer portion of the housing, the haptic feedback button module 200 received in the receiving space of the housing and transmitting vibration to the button when pressed by a pressing motion of the button.

According to an embodiment of the disclosure, the haptic feedback button module may include: the flexible printed circuit board (FPCB) 220, the force sensors 231, 232 disposed on the FPCB and outputting a vibration pattern based on a pattern of pressing the button, and the vibration actuator 260 disposed on the FPCB and outputting a power pattern based on a vibration pattern of the force sensors.

According to an embodiment of the disclosure, the button may include a first protrusion protruding toward the haptic feedback button module and the second protrusion 213b spaced apart from the first protrusion 213a. The force sensors may include the first force sensor 231 disposed coaxially with the first protrusion to be pressed by the first protrusion, the second force sensor 232 disposed coaxially with the second protrusion to be pressed by the second protrusion, and the third protrusion 214 protruding toward the haptic feedback button module between the first protrusion and the second protrusion. The vibration actuator 260 may be disposed corresponding to the third protrusion to transmit vibration to the third protrusion of the button.

According to an embodiment of the disclosure, the haptic feedback button module 200 may include the waterproof member 270 disposed between the button and the first force sensor, the second force sensor and the vibration actuator to seal a coupling hole in the outer portion of the housing.

According to an embodiment of the disclosure, the haptic feedback button module 200 may include the first support plate 280 supporting the lower surface of the waterproof member and the second support plate 250 disposed between the flexible printed circuit board and the supporter to support the lower surface of the flexible printed circuit board.

According to an embodiment of the disclosure, the haptic feedback button module 200 may include the first protective member 241 disposed between the first protrusion and the first force sensor and the second protective member 242 disposed between the second protrusion and the second force sensor.

According to an embodiment of the disclosure, the haptic feedback button module 200 may include the first spacer 291 and the second spacer 292 which are adjacent to the first force sensor 231 and the second force sensor 232, respectively, and inserted between the flexible printed circuit board and the first support plate 280 to press the waterproof member 270 toward the outer portion of the housing.

According to an embodiment of the disclosure, the FPCB 220 may be disposed in the receiving space 196d of the housing.

It will be appreciated that various embodiments of the disclosure according to the claims and description in the specification can be realized in the form of hardware, software or a combination of hardware and software.

Any such software may be stored in non-transitory computer readable storage media. The non-transitory computer readable storage media store one or more computer programs (software modules), the one or more computer programs include computer-executable instructions that, when executed by one or more processors of an electronic device, cause the electronic device to perform a method of the disclosure.

Any such software may be stored in the form of volatile or non-volatile storage, such as, for example, a storage device like read only memory (ROM), whether erasable or rewritable or not, or in the form of memory, such as, for example, random access memory (RAM), memory chips, device or integrated circuits or on an optically or magnetically readable medium, such as, for example, a compact disk (CD), digital versatile disc (DVD), magnetic disk or magnetic tape or the like. It will be appreciated that the storage devices and storage media are various embodiments of non-transitory machine-readable storage that are suitable for storing a computer program or computer programs comprising instructions that, when executed, implement various embodiments of the disclosure. Accordingly, various embodiments provide a program comprising code for implementing apparatus or a method as claimed in any one of the claims of this specification and a non-transitory machine-readable storage storing such a program.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An electronic device, comprising:
a housing;
a button provided at a lateral side of the housing;
a flexible printed circuit board (FPCB) disposed below the button, the FPCB including a first sensor and a second sensor mounted on a first surface of the FPCB, the first sensor configured to detect a first pressure input applied through a first press portion of the button and output a first signal corresponding to the first pressure input, the second sensor configured to detect a second pressure input applied through a second press portion of the button and output a second signal corresponding to the second pressure input, the FPCB electrically connected to the first sensor and the second sensor;
a vibration actuator mounted on the first surface of the FPCB between the first sensor and the second sensor;
a vibration driver IC for driving the vibration actuator;
memory storing instructions; and
at least one processor comprising processing circuitry,
wherein the instructions, when executed by the at least one processor, cause the electronic device to:
identify a type of button input received through the button based on information received through at least one of the first sensor and the second sensor, and
cause the vibration actuator to generate a vibration pattern based on the type of button input.

2. The device of claim 1, wherein the type of button input received through the button inculdes one of:
one press for a defined time, two or more consecutive presses for the defined time, a press in a half-shutter motion for, and a swipe.

3. The device of claim 1, wherein the button comprises:
a first protrusion provided on a first side of a lower surface of the button to correspond to the first press portion and disposed at a location corresponding to the first sensor; and
a second protrusion provided on a second side of the lower surface of the button to correspond to the second press portion and disposed at a location corresponding to the second sensor.

4. The device of claim 3,
wherein the first sensor includes a first force sensor, and
wherein the second sensor includes a second force sensor spaced apart from the first force sensor.

5. The device of claim 4, wherein the button further comprises:
a third protrusion disposed between the first protrusion and the second protrusion of the lower surface of the button and configured to transfer vibration generated by the vibration actuator to an upper surface of the button.

6. The device of claim 4, wherein the first force sensor, the second force sensor and the vibration actuator are disposed side by side on a first side of the FPCB.

7. The device of claim 6, wherein the vibration actuator comprises:
a first vibration actuator adjacent to the first force sensor and at least a portion of which is overlapped by the first protrusion; and
a second vibration actuator adjacent to the second force sensor and at least a portion of which is overlapped by the second protrusion.

8. The device of claim 4, wherein the first force sensor and the second force sensor are disposed on a first side of the FPCB; and
wherein the vibration actuator is disposed on a second side that is opposite to the first side of the FPCB.

9. The device of claim 8, wherein the vibration actuator comprises:
a first vibration actuator overlapped by the first force sensor; and
a second vibration actuator overlapped by the second force sensor.

10. The device of claim 8, wherein the vibration actuator comprises:
a first vibration actuator overlapping the first forces sensor; and
a second vibration actuator overlapping the second force sensor.

11. The device of claim 5, wherein the third protrusion comprises:
a first vibration receiver and a second vibration receiver protruding from both ends of the third protrusion, respectively, to transfer vibration generated by the vibration actuator to both ends of the button.

12. The device of claim 5, further comprising:
a supporter disposed between an inner portion of the housing and the FPCB, and configured to guide vibration generated by the vibration actuator towards the button.

13. The device of claim 5, wherein the button further comprises:
a coupling member inserted into a coupling hole provided on an outer portion of the housing and configured to prevent the button from being separated from the coupling hole of the housing.

14. The device of claim 5, further comprising:
a waterproof member disposed between the button and the first force sensor, and between the second force sensor and the vibration actuator,
wherein the first protrusion, the second protrusion and the third protrusion are inserted into a first through hole, a second through hole and a third through hole disposed on an outer portion of the housing, respectively, and
wherein the waterproof member comprises:
a first rib in close contact with the outer portion of the housing and configured to surround a periphery of the first through hole;
a second rib in close contact with the outer portion of the housing and configured to surround a periphery of the second through hole; and
a third rib in close contact with the outer portion of the housing and configured to surround a periphery of the third through hole.

15. The device of claim 14, further comprising:
a first spacer and a second spacer adjacent to the first force sensor and the second force sensor, respectively, and configured to be inserted between the FPCB and the waterproof member to press the waterproof member towards the outer portion of the housing.
